# EUROPÄISCHE PATENTSCHRIFT

(11) **EP 2 603 070 B1**
(45) Veröffentlichungstag und Bekanntmachung des Hinweises auf die Patenterteilung: **11.02.2015**
(21) Anmeldenummer: 11730184.6
(22) Anmeldetag: 12.05.2011
(51) Int. Cl.: A01K 1/12

(54) **EINRICHTUNG ZUR AUTOMATISIERTEN REINIGUNG VON MELKSTATIONEN**
DEVICE FOR CLEANING MILKING STATIONS IN AN AUTOMATED MANNER
DISPOSITIF DE NETTOYAGE AUTOMATISÉ DE STATIONS DE TRAITE

(30) Priorität: 13.08.2010 DE 102010034300
(43) Veröffentlichungstag der Anmeldung: 19.06.2013
(73) Patentinhaber: Maier, Jakob, 86842 Türkheim (DE); Hatzack, Wilfried, 86842 Türkheim (DE)
(72) Erfinder: Maier, Jakob, 86842 Türkheim (DE); Hatzack, Wilfried, 86842 Türkheim (DE)
(74) Vertreter: Grünecker, Kinkeldey, Stockmair & Schwanhäusser
(86) Internationale Anmeldenummer: PCT/EP2011/002362
(87) Internationale Veröffentlichungsnummer: WO 2012/019662

(56) Entgegenhaltungen:
- EP-A1- 1 230 844
- WO-A1-2007/040387
- DE-A1-102007 021 965
- US-A- 3 835 814

## Beschreibung

Die vorliegende Erfindung betrifft generell das Melken von Milchtieren unter Anwendung teilweise automatisierter Verfahren und Systeme, wobei insbesondere Milchtiere in einer Melkstation mit einem oder mehreren Melkplätzen gemolken werden.

Die zunehmende Globalisierung der Agrarmärkte stellt immer höhere Anforderungen an die Erzeuger von Milch und Milchprodukten. In zunehmendem Maße muss die Milch möglichst preisgünstig erzeugt werden, wobei auch eine hohe Qualität der Milch beizubehalten ist, um einerseits die gesetzlichen Anforderungen im Hinblick auf die Milchqualität und Hygiene beizubehalten, und auch um andererseits die Tiergesundheit in hohem Maße aufrecht zu erhalten, da diese ganz entscheidend für die Milchleistung der Tiere ist. Um die Erzeugung großer Mengen von Milch in einem Agrarbetrieb zu ermöglichen, werden vollautomatische oder semiautomatische Melkanlagen eingesetzt, so dass das Melken einer großen Anzahl an Tieren mit moderat geringem Personalaufwand bewerkstelligt werden kann. Zwar bieten vollautomatische Melkanlagen, sogenannte Melkroboter, die Möglichkeit, das für die Erzeugung der Milch erforderliche Personal zahlenmäßig stark zu reduzieren, da im Prinzip der gesamte Melkvorgang automatisch ablaufen kann, die äußerst hohen Anschaffungskosten sowie der Aufwand in Bezug auf Wartung des vollautomatisierten Systems sind dabei jedoch entscheidende Gesichtspunkte, die das Einführen vollautomatisierter Anlagen insbesondere in mittleren und großen Agrarbetrieben als ungünstig erscheinen lassen. Auch kann die Milchleistung pro Tier unter Umständen geringer sein als in nicht vollautomatisierten Anlagen. Daher werden in vielen Betrieben semiautomatische Melkanlagen eingesetzt, in denen bestimmte Handlungen während des Melkvorgangs manuell durchgeführt werden, wobei insbesondere das Ansetzen der einzelnen Melkbecher an die Zitzen der Tiere manuell erfolgt.

Um einen möglichst hohen Durchsatz beim Melken der Tiere zu erreichen, werden üblicherweise Melkstationen vorgesehen, in denen mehrere Melkplätze vorhanden sind, wovon jeder mit einem eigenen Melkgeschirr versehen ist, so dass je nach Belegung der mehreren Melkplätze mehrere Tiere gleichzeitig gemolken werden können. Dazu werden die Tiere in die Melkstation in der Weise eingeschleust, dass nach Möglichkeit möglichst viele Melkplätze ständig mit einem zu melkenden Tier besetzt sind, so dass Durchsätze von 60 Tieren pro Stunde oder mehr pro einzelnem Bediener der Melkstation möglich sind. Die Melkstationen für semiautomatisierte Betriebe sind in der Regel so konzipiert, dass mit möglichst geringem Personalaufwand eine hohe Milchleistung erreicht werden kann. Dazu gibt es etwa lineare Melkstationen, in denen mehrere Melkplätze in einer Reihe angeordnet sind, wobei in der Regel die Melkplätze auf einem etwas höheren Niveau im Vergleich zum Bedien- oder Wartungsgang liegen, so dass der Bediener einen guten Zugang zum Euter des Tieres für das Anrüsten bzw. Abnehmen des Melkgeschirrs vorfindet. Es werden auch doppelreihige Melkstationen eingesetzt, so dass aufgrund der geringeren zurückzulegenden Strecken zwischen den mehreren zu bedienenden Melkplätzen eine noch größere Anzahl an Tieren von einem einzelnen Bediener gehandhabt werden kann. In vielen anderen Anordnungen, in sogenannten Melkkarussellen, sind die Melkplätze auf einer drehbaren Plattform angeordnet, so dass nur ein kleiner Abschnitt dieses Karussells vom Bediener überwacht und bearbeitet werden muss, etwa zum Anrüsten oder Abnehmen des Melkgeschirrs, während im restlichen Abschnitt des Karussells der eigentliche Melkvorgang automatisch stattfindet. D. h., für typische Melkstationen ist eine bestimmte Anzahl von Melkplätzen in einer geeigneten geometrischen Konfiguration angeordnet und die einzelnen Melkplätze sind über einen geeigneten Zugang für die Tiere erreichbar, so dass bereits gemolkene Tiere aus der Melkstation abwandern und neue Tiere in die jeweiligen freigewordenen Melkptätze zuwandern können.

Neben vielen physiologischen Aspekten des Melkvorgangs selbst, d. h. eine möglichst naturnahe Nachbildung des Melkvorgangs durch das Melkgeschirr und die daran angeschlossenen Vakuumanlagen, sind auch viele hygienische Vorgaben, die für die Qualität der Milch entscheidend sind, zu berücksichtigen. Zwar spielt der Melkvorgang an sich bereits eine große Rolle für die Qualität der Milch und die Gesundheit der Tiere, was letztlich zu einem höheren Milchertrag führt, die hygienischen Zustände der Melkstation als ganzes sind jedoch auch von entscheidender Wichtigkeit bei der betriebsmäßigen Erzeugung von Milch. Beispielsweise ist es wichtig, die Verschleppung von Keimen einzuschränken oder zu verhindern, so dass ein hohes Maß an Tiergesundheit auch bei großen Tierbeständen gewährleistet ist. Dazu sind einerseits strenge hygienische Anforderungen beim Melkvorgang selbst einzuhalten, etwa im Hinblick auf die Sauberkeit der Tiereuter, andererseits ist es jedoch auch von entscheidender Bedeutung, die einzelnen Melkplätze der Station sowie die Zugänge in einem möglichst hygienisch einwandfreien Zustand zu halten. Beim Betrieb der Melkstationen wird unvermeidlich ein hoher Grad an Kontamination bzw. Verschmutzung durch Fäkalien hervorgerufen, wobei auf Grund der Bauweise der Melkstationen versucht wird, den Einfluss dieser Kontaminationen in Bezug auf die Milchqualität und Tiergesundheit möglichst gering zu halten. Dazu werden geeignete Gitterböden in den Zugängen und Melkplätzen vorgesehen, so dass die entsprechenden Fäkalien ablaufen können. Gelegentlich werden zur effektiveren Entfernung unvermeidlicher Verschmutzungen auch fest installierte Leitungssysteme in den Melkplätzen vorgesehen, die nach Beendigung der Melkvorgänge beispielsweise Wasser versprühen, um damit am Boden liegende Fäkalien abzuleiten. Dabei sind jedoch die entsprechenden Leitungssysteme selbst der Kontamination ausgesetzt und auch die Beaufschlagung von nicht gut zugänglichen Bereichen, beispielsweise den Seitenwänden und den Zugängen der Melkstation, und dergleichen, sind nur sehr eingeschränkt oder gar nicht der Reinigung zugänglich. Daher wird häufig zusätzlich oder alternativ zu entsprechenden fest installierten Leitungssystemen eine manuelle Reinigung der Melkstationen zumindest in längeren Abständen vorgesehen. Die entsprechende Reinigung ist dabei sehr zeit- und personalaufwendig, wobei der Erfolg der Reinigungsarbeit subjektiven Kriterien des Bedieners unterliegt, so dass keine gleichmäßig hohe Qualität hinsichtlich der hygienischen Bedingungen in der Melkstation gewährleistet ist. Insbesondere ist die starke Konkurrenz im Agrarmarkt zu berücksichtigen, so dass auf Grund der bereits sehr hohen Belastung der Bediener einer Melkstation zur Erreichung eines möglichst hohen Durchsatzes diesen die zusätzliche regelmäßige manuelle Reinigung der Melkstation kaum zumutbar ist, ohne dass weitere personelle Aufstockungen in den Agrarbetrieben vorgesehen werden. Dies führt jedoch zu deutlich höheren Kosten, wodurch die Konkurrenzfähigkeit wesentlich beeinträchtigt wird. Es wird daher häufig beobachtet, dass die Reinigung der Melkstationen auf ein entsprechendes Minimum reduziert wird, so dass zwar gewisse hygienische Auflagen gerade noch eingehalten werden, wobei jedoch langfristig die Qualität der Milch und auch die Tiergesundheit nicht auf einem gewünschten hohen Niveau gehalten werden können.

Aus der Druckschrift EP 1230844 A1 ist eine Reinigungsvorrichtung für einen Melkplatz bekannt, wobei die Reinigungsvorrichtung bewegliche Arme mit an deren Enden angeordneten Düsen umfasst, die wiederum mit einem Wasserversorgungssystem verbunden sind. Die Düsen können mittels der beweglichen Arme in einer Reinigungsposition angeordnet werden.

Dokument DE 10 2007 201965 A1 zeigt eine Transportvorrichtung zur Beförderung von Bedienpersonal während eines Melkvorgangs, wobei die Transportvorrichtung während des Melkvorgangs nacheinander mehrere Melkplätze anfährt.

Im Hinblick auf die zuvor dargelegte Situation ist es eine Aufgabe der vorliegenden

Erfindung, Mittel anzugeben, um eine Melkstation insbesondere im Hinblick auf eine verbesserte Hygiene effizient zu betreiben.

Die vorangehende Aufgabe wird gelöst durch eine Einrichtung zur Reinigung von Melkplätzen gemäß Anspruch 1, wobei weitere vorteilhafte Ausgestaltungen in den abhängigen Ansprüchen 2 bis 10 definiert sind. Weiterhin wird die vorangehende Aufgabe gelöst durch eine Melkstation nach Anspruch 11. Eine weitere Lösung der vorangehenden Aufgabe wird durch ein Verfahren gemäß Anspruch 12 bereitgestellt, wobei vorteilhafte Ausgestaltungen davon in den abhängigen Ansprüchen 13 bis 15 definiert sind.

Gemäß einem Aspekt der vorliegenden Erfindung wird die Aufgabe gelöst durch eine Einrichtung zur Reinigung von einem oder mehreren Melkplätzen. Die Einrichtung umfasst eine Reinigungseinheit, die ausgebildet ist, ein Prozessfluid steuerbar auszugeben. Des weiteren umfasst die Einrichtung eine Transporteinheit, die ausgebildet ist, die Reinigungseinheit steuerbar in mindestens eine Neutralposition zu bringen, in der die Reinigungseinheit beim Melken von Tieren in dem einen oder den mehreren Melkplätzen nicht durch die Tiere kontaminierbar ist, und die ferner ausgebildet ist, die Reinigungseinheit steuerbar in mindestens eine Reinigungsposition zur Reinigung des einen oder der mehren Melkplätze zu bringen. Des weiteren umfasst die Einrichtung eine Steuereinheit, die in Funktionsverbindung mit der Reinigungseinheit und der Transporteinheit steht und einen implementierten Steuerungsalgorithmus aufweist, der auf der Grundlage eines Aktivierungssignals die Transporteinrichtung veranlasst, die Reinigungseinheit in die mindestens eine Neutralposition oder die mindestens eine Reinigungsposition zu bringen. Ferner weist die Einrichtung eine Bedieneraufnahme auf, die mit der Transporteinheit so verbunden ist, dass die Bedieneraufnahme zur Abwicklung eines Melkvorgangs an jeweils jeden des einen oder der mehreren Melkplätze herangeführt werden kann. In dieser Ausführungsform kann somit die Einrichtung auch gleichzeitig während des Melkvorgangs als effizientes Transportmittel für den Bediener genutzt werden, so dass insgesamt die Effizienz des semiautomatisierten Melkvorganges und damit der Durchsatz erhöht wird. Andererseits ist dabei auch gewährleistet, dass eine geeignete Neutralstellung eine Kontamination der Reinigungseinheit während des Melkvorganges verhindert, wobei nach erfolgtem Melkvorgang und bei Abwesenheit des Bedienpersonals sodann das automatisierte Anfahren der jeweiligen Reinigungspositionen erfolgt. Diese zweifache Nutzung der Transporteinheit der Einrichtung ergibt somit eine sehr effiziente Gesamtanordnung, da die Transporteinrichtung somit die Effizienz eines Bedieners während des Melkvorgangs erhöht und die nachfolgende automatisierte Reinigung ohne Bediener erfolgt, so dass Milchproduktion und Hygienequalität ohne zusätzlichen Personalaufwand erhöht werden können. Die Bediener-Aufnahme kann dabei dauerhaft mit der Einrichtung verbunden sein oder aber durch geeignete Mittel bei Bedarf angekoppelt werden.

Die erfindungsgemäße Einrichtung für die Reinigung von Melkplätzen ist auf Grund der zuvor genannten Eigenschaften so ausgebildet, dass eine automatisierte Bereitstellung zumindest eines Reinigungsfluids, etwa in Form von Wasser, Spüllösungen, und dergleichen, an entsprechenden Reinigungspositionen ermöglicht wird, wobei die Reinigungseinheit vor dem eigentlichen Reinigungsprozess in einer "sicheren" Neutralposition angeordnet ist, in der eine Kontamination, d.h. Verschmutzung, der Reinigungsanlage durch die Tiere während des Melkvorganges nahezu ausgeschlossen ist. Der Vorgang des Wechsels von einer Neutralposition zu einer oder mehreren geeigneten Reinigungspositionen erfolgt in automatisierter Weise auf der Grundlage der Steuereinheit und des darin implementierten Steuerungsablaufs. Dadurch kann eine sehr effiziente Abdeckung von zu reinigenden Oberflächen erreicht werden, da im Steuerungsablauf entsprechende Reinigungspositionen hinterlegt oder aktuell bestimmt werden können, so dass stets ein gewünschter Grad an Beaufschlagung mit Reinigungsfluid entsprechender Flächen gewährleistet ist, ohne dass dabei subjektive Kriterien, etwa eines Bedieners, Einfluss nehmen. Auf diese Weise kann somit der hygienische Zustand der Melkstation, d. h. zumindest der Melkplätze nach genau festgelegten Kriterien beibehalten werden, wobei auch eine geeignete Überwachung des hygienischen Zustands, beispielsweise in Form des Kontaminationsgrades, durch sensorische Einrichtungen, wie dies nachfolgend erläutert ist, erfolgen kann. Durch die automatisierte Steuerung der Neutralposition und der entsprechenden Reinigungspositionen lässt sich auch der zeitliche Abstand zwischen entsprechenden Reinigungsintervallen im Vergleich zu konventionellen Betrieben verkürzen, ohne dass damit ein zusätzlicher Personalaufwand verbunden ist. Z. B. kann ein "externes" Aktivierungssignal ausgelöst werden, beispielsweise von einem Bediener, wenn eine entsprechende Reinigung der Melkstation gewünscht ist. In anderen Fällen kann ein entsprechendes "internes" Aktivierungssignal erzeugt werden, beispielsweise auf der Grundlage eines vorinstallierten Zeitablaufschemas, auf der Grundlage von Sensordaten, und dergleichen, so dass insbesondere ein hoher Grad an Flexibilität bei der Häufigkeit der Reinigungsaktivitäten sowie auch bei der Intensität der Reinigung möglich ist. Beispielsweise können bei entsprechender Ausbildung der Einrichtung für die Reinigung der Melkplätze gewisse Melkplätze individuell gereinigt werden, sofern eine entsprechende Kontamination festgestellt wird, ohne dass dabei der Betrieb anderer Melkplätze wesentlich beeinflusst wird. Durch die automatisierte Reinigung besteht auch die Möglichkeit, effizient unterschiedliche Reinigungsfluide zur Anwendung zu bringen, wobei dies nach gewissen Kriterien erfolgen kann, etwa dem Grad der Kontamination, in Abhängigkeit von zeitlichen Vorgaben, und dergleichen, wobei die Beaufschlagung mit unterschiedlichen Reinigungsfluiden auch lokal unterschiedlich in der Melkstation vorgenommen werden kann, indem eben an gewissen Reinigungspositionen eine Art an Reinigungsfluid verwendet wird, während an anderen Reinigungspositionen eine andere Art an Reinigungsfluid benutzt wird.

In einer weiteren vorteilhaften Ausführungsform ist der Steuerungsalgorithmus ferner so ausgebildet, dass die Reinigungseinheit veranlasst wird, das Reinigungsfluid an einer Vielzahl unterschiedlicher Reinigungspositionen pro Melkplatz auszugeben. Auf diese Weise gelingt es, einen gewünschten hohen Grad an Abdeckung beim Reinigungsprozess in steuerbarer und automatisierter Weise zu erreichen. Insbesondere können die durch den Steuerungsablauf angefahren Reinigungspositionen besonders kritische Stellen beinhalten, die etwa bereits im Vorfeld bekannt sind oder die durch entsprechende Sensordaten oder weitere Prozessinformationen aktuell ermittelt werden.

In einer vorteilhaften Ausführungsform umfasst die mindestens eine Reinigungsposition eine Position zur Beaufschlagung von Seitenflächen der Melkplätze und insbesondere auch von Seitenflächen von Zugängen zu den Melkplätzen mit dem Reinigungsfluid, so dass auch eine effiziente Reinigung an Bereichen erfolgen kann, die typischerweise für fest installierte Reinigungsleitungssysteme nur schwer zugänglich sind und konventioneller Weise eine aufwendig manuelle Reinigung erfordern.

In einer weiteren Ausführungsform weist die Einrichtung mindestens einen Positionsbestimmungssensor auf, der ausgebildet ist, die mindestens eine Reinigungsposition zu bestimmen. Der Sensor kann somit geeignete Daten bereitstellen, die es der Steuereinheit ermöglichen, geeignete Positionsdaten zu erzeugen, um damit eine gewünschte Beaufschlagung mit Reinigungsfluid zu erreichen. Beispielsweise kann der Positionsbestimmungssensor unter Nutzung von bildgebenden Systemen, Abstandssensoren, etwa in Form von Ultraschallsensoren, oder generell von Sensoren unter Nutzung von akustischen und/oder elektromagnetischen Signalen, Näherungsschalter, etc. und dergleichen, die aktuelle Konfiguration der Melkplätze bestimmen, so dass eine geeignete Positionierung im Hinblick auf die aktuelle Konfiguration ermittelt werden kann. Beispielsweise können damit "unvorhergesehene" Hindernisse ermittelt werden, wodurch eine Kollision zuverlässig vermieden werden kann. In anderen Fällen kann auf Grund der Sensordaten auch eine automatisierte Ermittlung von Positionsraten erfolgen, ohne dass zuvor eine entsprechende Hinterlegung entsprechender Positionsdaten oder ein manuell überwachtes "Einlernen" von Bewegungsabläufen für die Reinigungseinheit erforderlich ist. Beispielsweise kann ein entsprechender Lernmodus durchgeführt werden, in welchem unter Anwendung von bildgebenden Systemen, und/oder anderen Sensorsystemen ein geeigneter Bewegungsablauf, d. h. eine Zusammenstellung von geeigneten Reinigungspositionen, erfolgt, wobei die Ermittlung der eigentlichen Reinigungspositionen dann unter gewissen Bedingungen erfolgen kann, beispielsweise unter Optimierung der Wege zwischen den einzelnen Reinigungspositionen, wobei auch die Effizienz des Beaufschlagens mit Reinigungsfluids berücksichtigt werden kann, so dass etwa höhere Stellen an der Seitenwand vor dem Reinigen von Bodenflächen und tieferen Wandbereichen mit Fluid beaufschlagt werden.

In einer weiteren vorteilhaften Ausführungsform ist in der Einrichtung ein Kontaminationserkennungssensor vorgesehen, der kontaminierte Stellen eines Melkplatzes erfassen kann. Die Kontamination bzw. die Verschmutzung der Melkstation, d. h. der Gesamtheit der Melkplätze und der zugehörigen Zugänge, kann sehr dynamischen Schwankungen unterliegen, die etwa durch den äußeren Verschmutzungsgrad der Tiere vor dem Melken, der Fütterung, individuellen Gesundheitsaspekten, Stress und dergleichen abhängen. Beispielsweise kann auf Grund der "mentalen" Verfassung einzelner Tiere, etwa durch Aufgeregtheit, etc., vor allem durch die Fütterung ein sehr hoher Grad an Kontamination auftreten, der demzufolge durch die Kontaminationserkennungssensoren erfasst werden kann, um damit bei Bedarf in dem automatisierten Steuerungsablauf entsprechend Berücksichtigung zu finden. Beispielsweise können auch hier bildgebende Systeme effizient verwendet werden, um den Kontaminationsgrad zumindest in gewissen Bereichen der Melkplätze oder auch der entsprechenden Zugänge zu bestimmen. Wie dies bereits zuvor erläutert ist, können entsprechende Sensordaten dann verwertet werden, um etwa die Art der Reinigungspositionen festzulegen, um die Art des zu verwendenden Reinigungsfluids auszuwählen, um ggf. die Art der Reinigung, beispielsweise mittels mechanischer Komponenten in Form von Bürsten, etc., auszuwählen, um den Zeitpunkt einer Reinigung festzulegen, und dergleichen. Beispielsweise kann bei Feststellung einer entsprechenden verstärkten Kontamination ein entsprechender Melkplatz "gesperrt" werden und es können lokale Reinigungsmaßnahmen eingeleitet werden, sofern die Reinigungsanlage entsprechend so gestaltet ist, dass eine individuelle Reinigung des gesperrten Melkplatzes möglich ist, ohne den Betrieb der anderen Melkplätze wesentlich zu beeinträchtigen.

In anderen Ausführungsbeispielen kann bei der globalen Reinigung der Melkstation auch die Intensität der Reinigung auf der Grundlage der Kontaminationssensordaten durchgeführt werden, beispielsweise indem eine größere Menge an Reinigungsfluid ausgegeben wird, etwa durch eine längere Verweilzeit pro kritischer Reinigungsposition, und dergleichen.

In einer weiteren Ausführungsform ist der Steuerungsalgorithmus ferner ausgebildet, die Reinigungspositionen so zu wählen, dass mindestens eine vordefinierte Fläche, insbesondere ein Teil einer Melkanlage, von der Beaufschlagung durch das Reinigungsfluid ausgenommen ist. Wie bereits zuvor erwähnt ist, werden in Melkstationen häufig automatisierte Komponenten eingesetzt, um den Aufwand für das Bedienpersonal beim eigentlichen Melkvorgang zu verringern. In diesen automatisierten Komponenten werden vorzugsweise elektronische Einrichtungen oder sensible mechanische Komponenten eingesetzt, in denen der Kontakt mit einem Reinigungsfluid oder zumindest mit einer gewissen Art oder Menge an Reinigungsfluid, dessen Druck, etc. unerwünscht ist. Beispielsweise können Elektronikkomponenten von automatisierten Melkgeschirren bei zu starker Beaufschlagung mit Reinigungsfluid unter Umständen ein fehlerhaftes Verhalten zeigen oder zerstört werden, so dass diese sensiblen Bereiche als Flächen deklariert werden können, die nicht der Fluidbeaufschlagung unterliegen sollen. In einigen anschaulichen Ausführungsformen wird dazu ein entsprechender Datensatz in dem Steuerungsalgorithmus hinterlegt, wenn sichergestellt ist, dass die jeweilige auszusparende Fläche lokal fixiert ist, während in anderen Ausführungsformen mittels sensorischer Daten, wie dies zuvor beschrieben ist, etwa in Form von bildgebenden Systemen, die tatsächliche Position der sensiblen Flächen zunächst erfasst und im Steuerungsalgorithmus verarbeitet wird, so dass die Reinigungspositionen aktuell ermittelt werden, um damit die empfindliche Fläche auszusparen.

In einer weiteren vorteilhaften Ausführungsform weist die Reinigungseinheit eine mechanische Reinigungseinheit auf, die die zu reinigende Oberfläche mechanisch kontaktiert. Auf diese Weise kann ergänzend zu dem Reinigungsfluid eine sehr intensive lokal begrenzte Reinigung erfolgen, so dass beispielsweise eine Kontamination benachbarter Flächen durch das Beaufschlagen von Reinigungsfluid stark reduziert ist. Beispielsweise kann das Reinigungsfluid in lokal begrenzter Weise mit nur geringem Druck aufgebracht werden, da ein wesentlicher Reinigungseffekt durch den mechanischen Kontakt, etwa mittels einer Bürste, erreicht wird. Das Beaufschlagen von Flächen mit dem Reinigungsfluid bei geringem Druck verhindert somit effizient ein unerwünschtes "Verteilen" von Kontaminationsstoffen, die ansonsten durch einen Hochdruckstrahl auf benachbarte Flächen aufgebracht werden könnten.

In einer weiteren vorteilhaften Ausführungsform weist die Einrichtung mindestens eine weitere Reinigungseinheit auf, wobei die Transporteinheit ausgebildet ist, die Reinigungseinheit und die mindestens eine weitere Reinigungseinheit unabhängig voneinander in eine entsprechende Neutralposition und eine Reinigungsposition zu bringen. Die Einrichtung wird damit als eine "verteilt wirkende" Reinigungseinrichtung bereitgestellt, da die jeweiligen Reinigungseinheiten unabhängig voneinander eingesetzt werden können. Auf diese Weise ist es möglich, bei gleichem Zeitaufwand eine deutlich höhere Reinigungseffizienz zu erreichen. In anderen Situationen können Melkplätze individuell gereinigt werden, ohne dass größere Transportaktivitäten für die Einrichtung als ganzes erforderlich sind. Beispielsweise kann, wie dies auch zuvor bereits dargelegt ist, ein intermittierendes Reinigen während des Betriebs der Melkstation erfolgen, wenn beispielsweise ein Melkplatz als besonders kontaminiert erkannt wurde, ohne dass ein größerer Einfluss auf andere Melkplätze erfolgt. D. h., durch das Vorsehen voneinander unabhängig ansteuerbarer Reinigungseinheiten, die beispielsweise entsprechenden Melkplätzen zugeordnet sind oder während des Betriebs ohne größere Störung des Melkbetriebs zugeordnet werden können, kann eine jeweilige Reinigungseinheit von der Neutralposition in die eine oder mehreren Reinigungspositionen gebracht werden, ohne dass eine größere Einflussnahme auf den gesamten Betriebsablauf in der Melkstation stattfindet.

In einer weiteren Ausführungsform ist die Transporteinheit ferner ausgebildet, die Einrichtung als ganzes zu verfahren. In dieser Ausführungsform kann somit die Einrichtung als ganzes entsprechend in der Melkstation so positioniert werden, dass mit Hilfe ein und derselben Reinigungseinheit die Vielzahl an Melkplätzen und zugehöriger Zugänge gereinigt werden kann. Auf diese Weise kann der Wartungs- oder Bediengang, der üblicherweise beim halbautomatisierten Melkvorgang genutzt wird, die einzelnen Melkvorgänge in den jeweiligen Melkplätzen zu überwachen und zu betreuen, für die Bewegung der Einrichtung verwendet werden, beispielsweise nach Beendigung des gesamten Melkbetriebs, so dass eine einzelne Reinigungseinheit ggf. ausreichend ist, um die Vielzahl der Melkplätze mit Reinigungsfluid zu beaufschlagen oder auch mit mechanischen Mitteln zu reinigen. Andererseits ist dabei die Neutralposition so gewählt, dass diese einerseits eine Kontamination während des Melkvorgangs effizient verhindert und andererseits den Betrieb während des Melkens nicht stört.

In einer vorteilhaften Ausführungsform ist die Transporteinheit mit einer an einer Decke der Melkplätze angeordneten Halterung mechanisch koppelbar, um die Einrichtung als ganzes zu verfahren. Auf diese Weise kann insbesondere der Boden des Bedienganges freigehalten werden, beispielsweise um einen ungeschränkten Zugang zu den jeweiligen Melkplätzen während der Melkvorgänge zu ermöglichen oder auch um bodengestützte Transporteinrichtungen zum Transport des oder der Bediener vorsehen zu können.

In anderen Ausführungsformen weist die Transporteinheit eine bodengestützte Fahreinheit auf, um die Einrichtung als ganzes zu verfahren. Dabei kann die Fahreinheit eine mechanisch mit dem Boden gekoppelte Einheit sein, d. h. beispielsweise ein schienengestütztes System, so dass gewisse Bewegungsabläufe bereits mechanisch vorgegeben sind und damit einen geringeren Steuerungsaufwand erfordern, während in anderen Ausführungsformen das bodengestützte Fahrzeug ein frei bewegbares Fahrzeug umfasst, das im Bediengang permanent vorhanden oder in diesen eingebracht wird und sodann automatisiert die geeigneten Reinigungspositionen grob anfährt und ferner die gewünschten Reinigungspositionen exakt einstellt, um damit in gezielter Weise den Reinigungsvorgang im Melkplatz auszuführen.

In einer weiteren vorteilhaften Ausführungsform weist die Einrichtung ferner eine Vorrichtung zum automatischen Ansetzen eines Melkgeschirrs auf, die mit der Transporteinheit so verbunden ist, dass die Vorrichtung zur Abwicklung eines Melkvorgangs an jeweils jeden des einen oder der mehreren Melkplätze herangeführt werden kann. In dieser Ausführungsform kann somit die Einrichtung auch gleichzeitig während des Melkvorgangs als effizientes Transportmittel für die Vorrichtung genutzt werden, so dass insgesamt die Effizienz des automatisierten Melkvorganges und damit der Durchsatz erhöht wird. Andererseits ist dabei auch gewährleistet, dass eine geeignete Neutralstellung eine Kontamination der Reinigungseinheit während des Melkvorganges verhindert. Die Vorrichtung kann dabei dauerhaft mit der Reinigungseinrichtung verbunden sein oder aber durch geeignete Mittel bei Bedarf angekoppelt werden.

In einer weiteren Ausführungsform ist die Steuereinheit ausgebildet, die Reinigungseinheit zur Einnahme der mindestens einen Reinigungsposition nur bei Abwesenheit des Bedieners zu veranlassen. Auf diese Weise wird sichergestellt, dass unter Nutzung der Transporteinheit zum Transport des Bedieners beim Melkvorgang keine Reinigungsaktivitäten stattfinden, die ansonsten den Betriebsablauf während des Melkens stören könnten. Auch wird dadurch sichergestellt, dass insbesondere die Feinansteuerung der jeweiligen Reinigungspositionen nur bei Abwesenheit eines Bedieners in der Transporteinrichtung veranlasst wird, so dass dadurch beliebige erforderliche Bewegungen der Transporteinrichtung durchgeführt werden können, ohne einen Bediener zu gefährden. Beispielsweise können entsprechende Stützarme, Ausleger, und dergleichen nach Bedarf verfahren werden, wie dies zum Einnehmen der Reinigungspositionen erforderlich ist, ohne dass die Anwesenheit eines Bedieners zu berücksichtigen ist.

Gemäß einem weiteren Aspekt der vorliegenden Erfindung wird die zuvor genannte Aufgabe gelöst mittels einer Melkstation, die einen oder mehrere Melkplätze aufweist, die jeweils ausgestattet sind, ein zu melkendes Tier aufzunehmen und dieses durch ein von einem Bediener oder automatisch anzusetzendes Melkgeschirr zu melken. Die Melkstation umfasst ferner eine Einrichtung zur Reinigung von Melkplätzen und deren Zugänge gemäß den Ausführungsformen, wie sie zuvor dargestellt sind, oder wie sie auch in der nachfolgenden detaillierten Beschreibung dargestellt sind.

Die Melkstation, die die automatisierte Einrichtung zur Reinigung der Melkplätze aufweist, ermöglicht einen höheren Milchdurchsatz bei gleichzeitig höherem Qualitätsstandard und verbesserter Tiergesundheit, ohne dass bei semiautomatisierten Melkstationen zusätzlicher Personalaufwand erforderlich ist. In einer Ausführungsform ist dabei die Einrichtung zur Reinigung von Melkplätzen auch ausgebildet, die mindestens eine Reinigungsposition so festzulegen, dass auch der Zugang der Melkstation mit dem Reinigungsfluid beaufschlagbar ist. Wie bereits zuvor erläutert ist, ist insbesondere der Zugang zu den jeweiligen Melkplätzen ein Bereich, der häufig und intensiv von den Tieren verschmutzt bzw. kontaminiert wird, aber in konventionellen Prozessstrategien ein sehr kritischer Bereich für die Reinigung ist, der typischerweise einen arbeitsintensiven Aufwand von Bedienern der Melkstation erfordert. Durch die automatisierte Einrichtung kann daher ein vorgegebener hoher Hygienestandard ohne zusätzlichen Personalaufwand erreicht werden, da insbesondere eine Reinigung aller Bereiche der Melkstation zeitlich so ausgeführt werden kann, dass eine gewünschte Häufigkeit der Reinigungsprozesse erreicht wird, ohne dass der eigentliche Melkbetrieb negativ beeinflusst wird.

In einer anschaulichen Ausführungsform sind die Melkplätze als zwei parallele Reihen angeordnet und die mindestens eine Neutralposition liegt zwischen den zwei parallelen Reihen aus Melkplätzen oder an deren Ende. Diese lineare "Tandemanordnung" von Melkplätzen ist eine häufig angetroffene Anordnung in Melkstationen, die einen hohen Durchsatz an zu melkenden Tieren bei geringem Personalaufwand ermöglicht.

In einer weiteren Ausführungsform sind die Melkplätze auf einem Karussell angeordnet. Die automatisierte Reinigung der Melkstationen kann somit in besonders vorteilhafter Weise in besonders häufig angetroffenen Konfigurationen an Melkstationen eingesetzt werden. Insbesondere in Verbindung mit der Reinigungseinrichtung, in der die Transporteinheit auch zum Transport des Bedieners während des Melkvorgangs genutzt wird, ergibt sich eine ausgeprägte Effizienzsteigerung dieser häufig verwendeten Melkstationskonfigurationen.

Die Einrichtung ist auch vorteilhaft in Verbindung mit vollautomatisierten Melkanlagen, d.h., sogenannten Melkrobotern einsetzbar, die einen oder mehrere Melkplätze aufweisen. Der Arm des Roboters kann dabei in einigen Ausführungsformen zugleich als die Transporteinheit der Reinigungseinrichtung dienen, während in anderen Varianten der Roboterarm für das automatische Melken unabhängig zu der Transporteinheit der Einrichtung vorgesehen ist.

Gemäß einem weiteren Aspekt der vorliegenden Erfindung wird die Aufgabe gelöst durch ein Verfahren zum Betreiben einer Melkstation. In dem Verfahren wird ein Melkvorgang in einem oder mehreren Melkplätzen unter manuellem oder automatischen Ansetzen eines Melkgeschirrs in dem einen oder den mehreren Melkplätzen ausgeführt. Das Verfahren umfasst ferner das Anordnen einer Reinigungseinheit einer Reinigungseinrichtung in einer Neutralposition während des Ausführens des Melkvorgangs, wobei die Neutralposition eine Kontamination der Reinigungseinrichtung durch zu melkende Tiere beim Ausführen des Melkvorgangs ausschließt. Das Verfahren umfasst ferner das Erzeugen eines Aktivierungssignals nach Beendigung des Melkvorgangs und das Auslösen eines in einer elektronischen Steuerung implementierten Steuerungsablaufs durch das Aktivierungssignal. Dabei veranlasst der Steuerungsablauf eine Transporteinheit der Reinigungseinrichtung, die Reinigungseinheit an mindestens einer Reinigungsposition zu positionieren und den einen oder die mehreren Melkplätze automatisch zu reinigen. Dabei umfasst das Ausführen des Melkvorganges ferner ein Positionieren eines Bedieners zum Ansetzen der Melkgeschirre mittels der Transporteinheit der Reinigungseinrichtung.

In einer weiteren Ausführungsform beinhaltet das Reinigen des einen oder der mehreren Melkplätze das Zuführen eines Fluids in lokal selektiver Weise. D. h., die mehreren Melkpositionen sind so gewählt, dass ein Fluid lokal selektiv, d. h. in lokal sehr begrenzter Weise auf eine zu reinigende Oberfläche aufgebracht wird, so dass entferntere Bereiche durch das Beaufschlagen mit Reinigungsfluid nicht zusätzlich kontaminiert werden. Das Verwenden eines Reinigungsfluids ermöglicht ferner eine sehr gezielte Art der Reinigung, indem diverse Fluide in Kombination oder einzeln verwendet werden, um die gewünschte hygienische Wirkung zu erreichen. Beispielsweise kann Wasser bevorzugt als Fluid verwendet werden, wobei bei Bedarf, gegebenenfalls auch in lokal selektiver Weise, ein anderes Reinigungsfluid oder ein zusätzliches Reinigungsmittel in das Grundfluid eingebracht wird. Es kann bei Bedarf auch eine gasförmige Komponente als Fluid eingesetzt werden, etwa in Kombination mit Flüssigkeiten, um damit die reinigende Wirkung zu verbessern.

In einer weiteren Ausführungsform umfasst das Reinigen des einen oder der mehreren Melkplätze eine lokale mechanische Kontaktierung von kontaminierten Oberflächen durch die Reinigungseinheit. Auf diese Weise kann eine sehr effiziente Reinigung erfolgen, beispielsweise durch Kontakt mit Bürsten, etc., beispielsweise auch unter zusätzlicher Benutzung eines Reinigungsfluids, wobei eine intensive Reinigungswirkung erreicht werden kann, ohne dass ein entsprechendes Fluid unter hohem Druck aufzubringen ist. Auf diese Weise kann die Wirkung der Reinigung lokal begrenzt werden, um damit eine unerwünschte Kontamination entfernterer Oberflächenbereiche zu vermeiden. Die mechanische Kontaktierung kann des weiteren zusätzlich eine Beaufschlagung mit Gas, Ultraschall, und dergleichen beinhalten, um somit die Effizienz noch weiter zu steigern. In anderen anschaulichen Ausführungsformen kann das Anwenden, von beispielsweise Ultraschall, etc. ohne direkten mechanischen Kontakt, d. h. lediglich mit Beaufschlagung eines Fluids erreicht werden. In diesem Zusammenhang soll als ein direkter mechanischer Kontakt ein Kontakt der zu reinigenden Oberfläche mit einem Festkörper, etwa den Borsten einer Bürste, etc. verstanden werden, während eine "Kontaktierung" der zu reinigenden Oberfläche durch ein Fluid, etwa eine Flüssigkeit oder ein Gas, das von der Reinigungseinheit ausgegeben wird, nicht als ein "mechanischer" Kontakt verstanden wird.

In einer weiteren Ausführungsform werden in den erfindungsgemäßen Verfahren mindestens zwei Melkplätze gleichzeitig gereinigt. Dadurch lässt sich eine sehr zeiteffiziente Reinigung der Melkstation erreichen.

In einem weiteren vorteilhaften Ausführungsbeispiel umfasst das Verfahren das Positionieren eines Bedieners zum Ansetzen der Melkgeschirre mittels der Transporteinheit der Reinigungseinrichtung. Bei dieser Betriebsweise der Melkstation ergibt sich eine hohe Effizienz im Hinblick auf Milchertrag, Qualität der Milch, Tiergesundheit und hygienischer Status der Melkstation bei vorgegebenem Personalaufwand. D. h., durch die Nutzung der Transporteinheit der Reinigungseinrichtung während des Melkvorgangs wird die Effizienz eines einzelnen Bedieners wesentlich erhöht, da eine größere Anzahl an Tieren pro Bediener beim Melkvorgang betreut werden kann, d. h. zumindest beim Anrüsten der Melkgeschirre, während andererseits die Einrichtung dann nach erfolgtem Melkvorgang ohne Bedienereinwirkung in automatisierter Weise die Reinigung der Melkstation vornimmt, wobei eben zum Teil die gleichen Gerätekomponenten zum Anfahren der Reinigungspositionen verwendet werden, wie sie auch zum Transport des Bedieners eingesetzt werden.

In einer weiteren Ausführungsform umfasst das Verfahren ferner: Positionieren einer Vorrichtung zum automatischen Ansetzen der Melkgeschirre mittels der Transporteinheit der Reinigungseinrichtung mittels der Transporteinheit. Dadurch kann der Geräteaufwand in einer hoch-automatisierten Melkanlage verringert werden, da insbesondere die Transporteinheit für mehrere Arbeitsprozesses, also beim eigentlichen Melken und beim anschließenden Reinigen verwendet werden kann.

Mit Bezug zu den begleitenden Zeichnungen werden nunmehr weitere anschauliche Ausführungsbeispiele detaillierter beschrieben. In den Figuren zeigen:

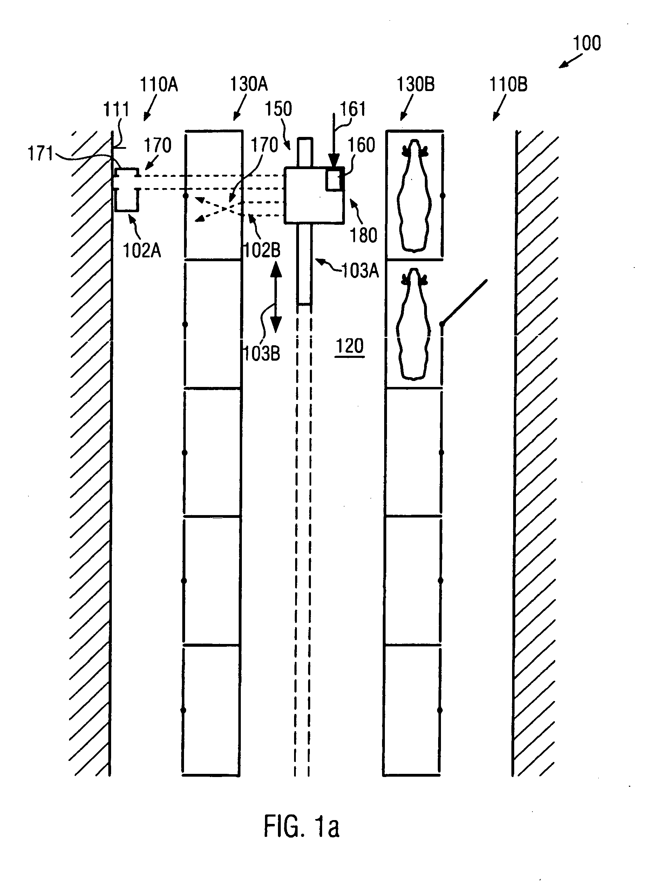

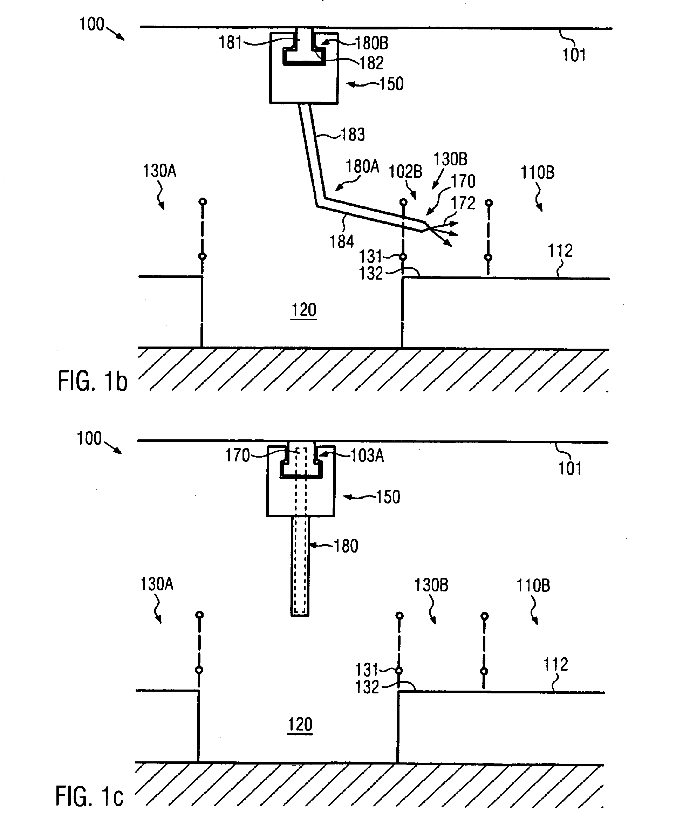

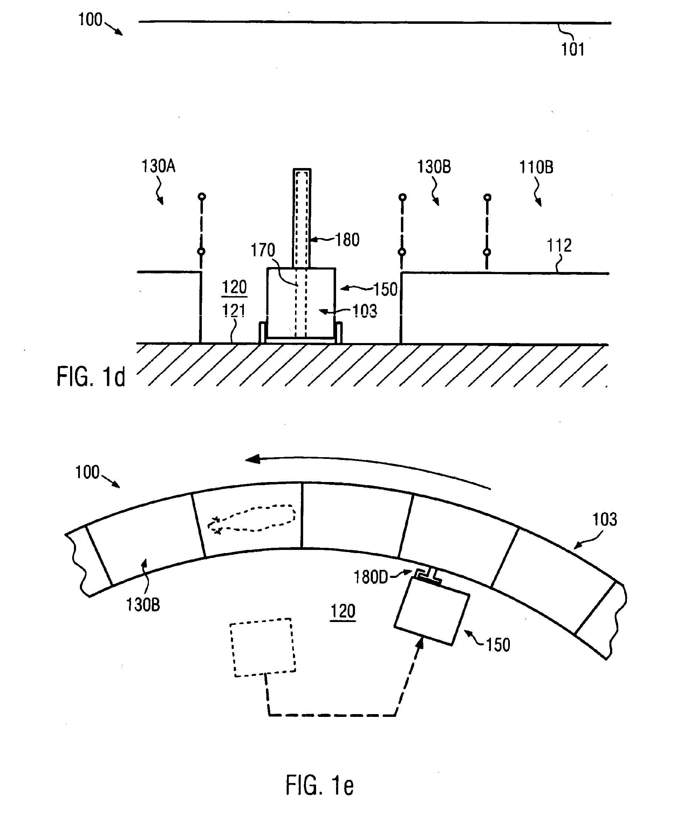

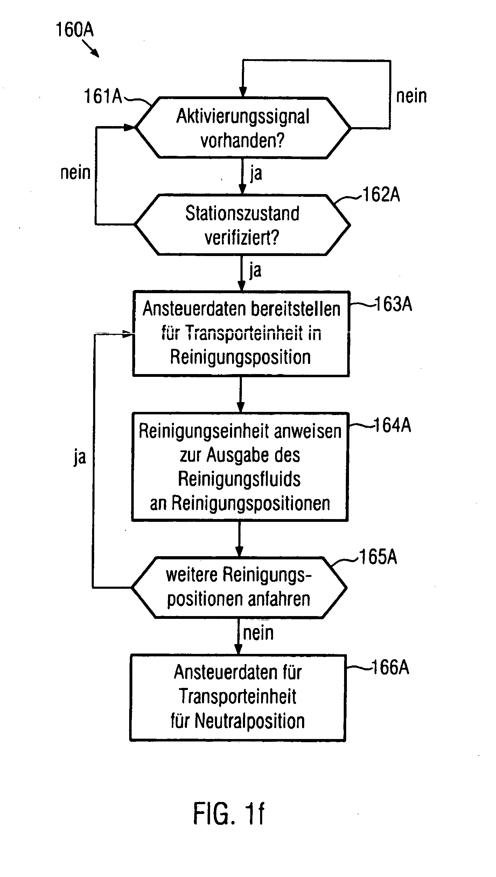

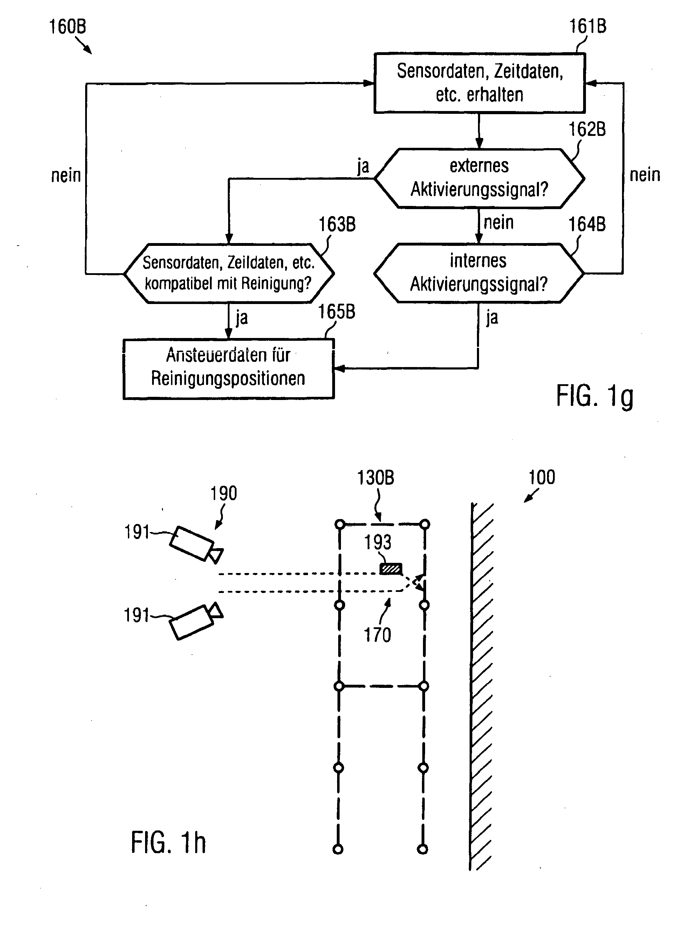

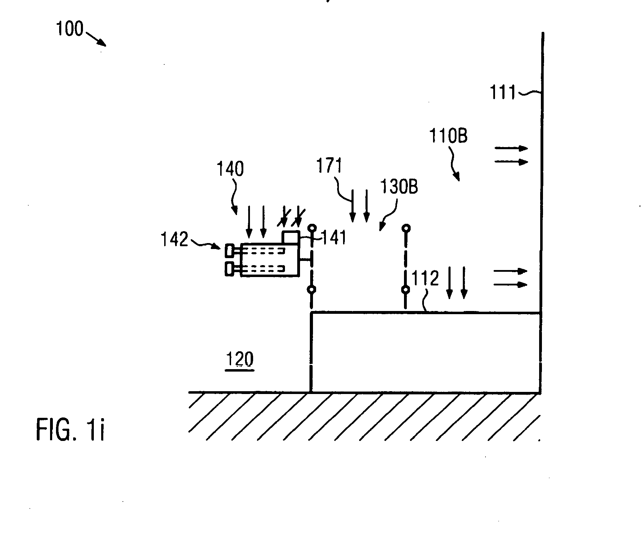

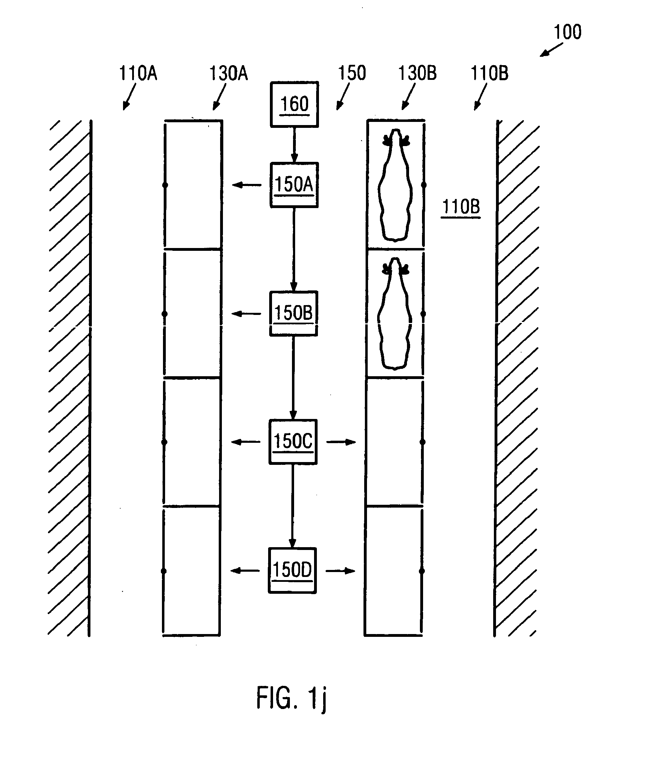

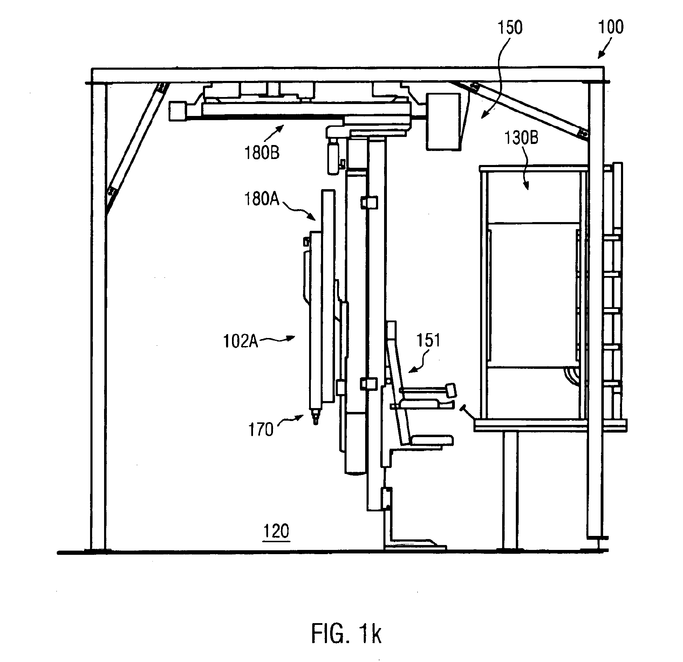

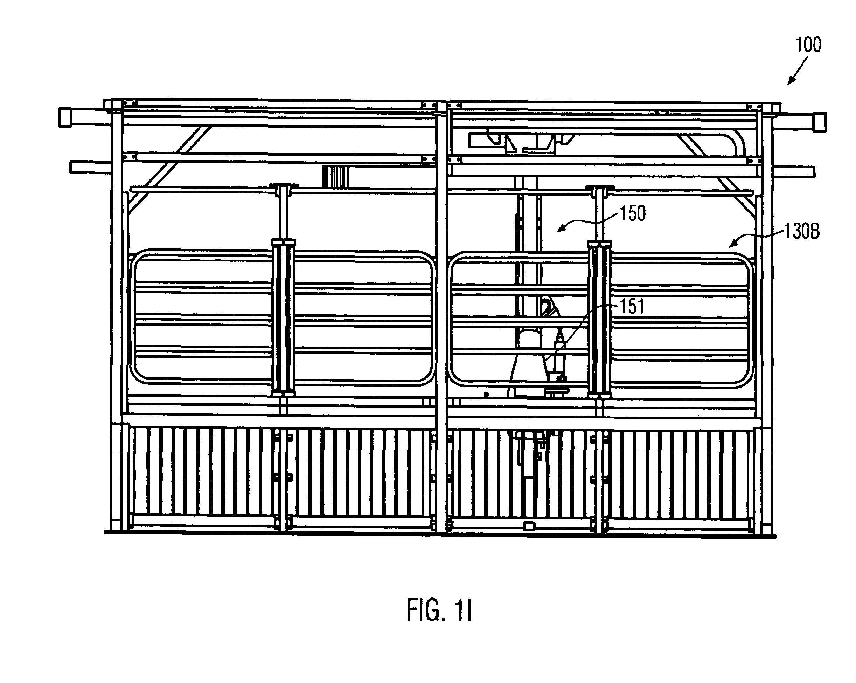

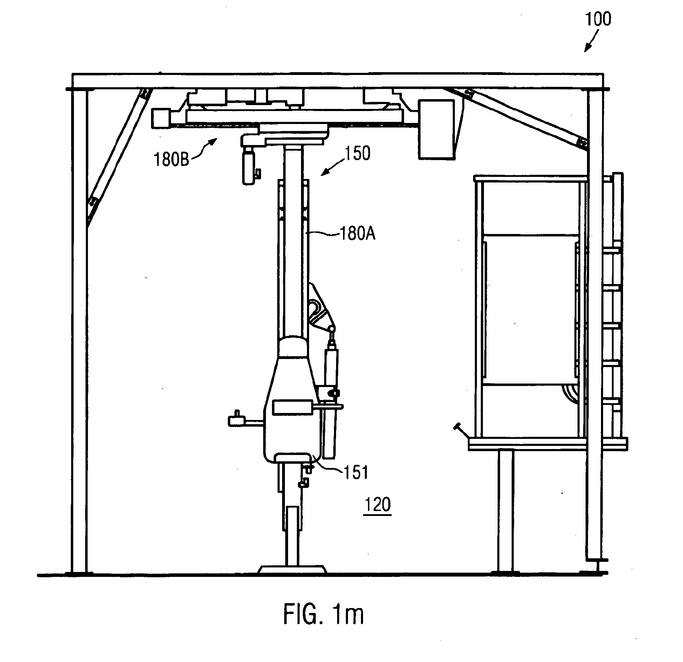

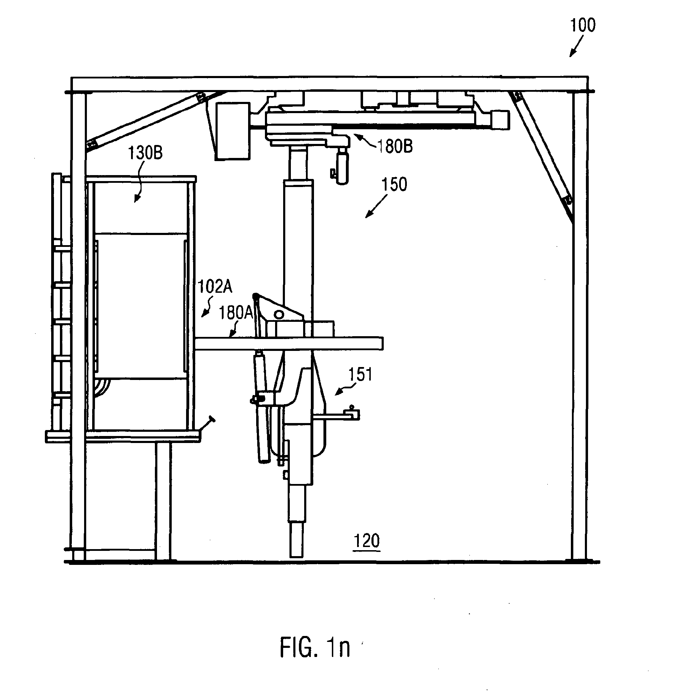

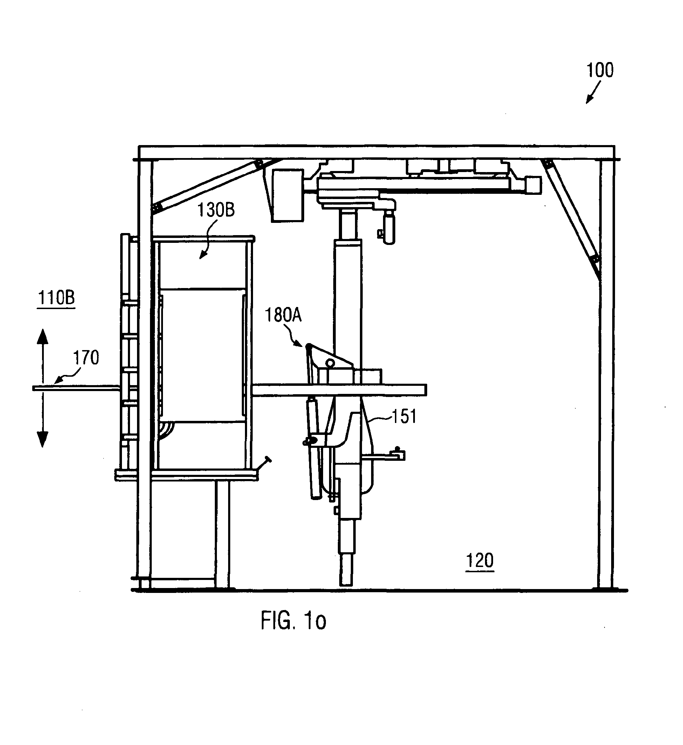

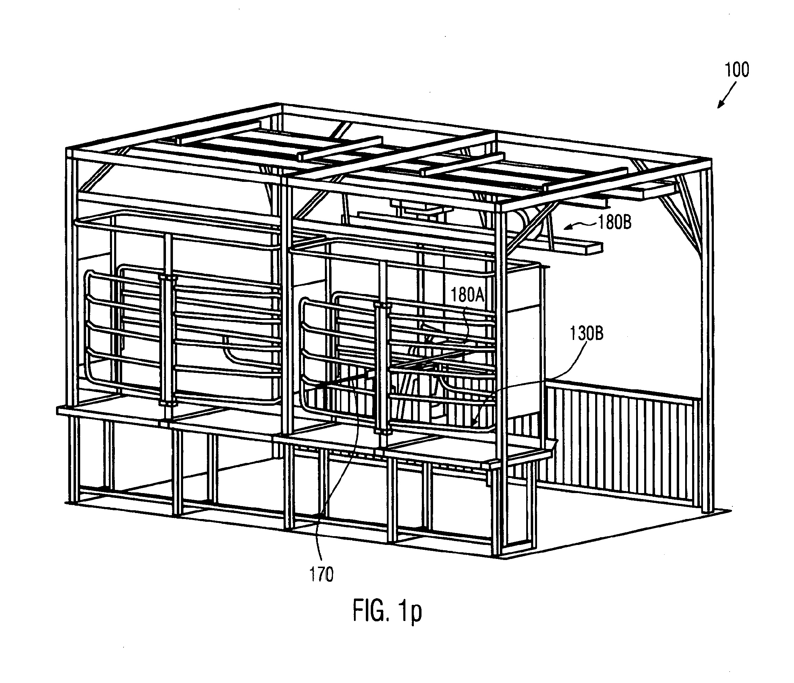

Fig. 1 a eine schematische Draufsicht einer Melkstation mit doppelreihig angeordneten Melkplätze, die mittels einer automatischen Reinigungseinrichtung gereinigt werden können,
Fig. 1b schematisch eine Seitenansicht in einer Ausführungsform, in der die Reinigungseinrichtung an der Decke der Melkstation angebracht ist, wobei eine von vielen Reinigungspositionen dargestellt ist,
Fig. 1c schematisch eine Seitenansicht, in der die deckengebundene Reinigungseinrichtung mit einer Neutralposition einer Reinigungseinheit dargestellt ist,
Fig. 1d schematisch eine bodengestützte Reinigungseinrichtung in Neutralposition gemäß anschaulicher Ausführungsformen,
Fig. 1e schematisch eine Melkkarussellanordnung, in der die automatische Reinigungseinrichtung eingesetzt ist,
Fig. 1f und 1g beispielhafte Steuerungsabläufe, die in der Steuereinheit der erfindungsgemäßen Reinigungseinrichtung implementiert sind,
Fig. 1h schematisch ein Sensorsystem, das zur Bereitstellung von Sensordaten für die Positionsbestimmung und/oder für die Kontaminationserkennung und/oder für die Zustandserfassung der Melkstation gemäß anschaulicher Ausführungsformen dient,
Fig. 1i schematisch die Melkstation, wobei sensitive Bereiche, insbesondere in einem "elektronischen" Melkgeschirr, von der Beaufschlagung mittels eines Reinigungsfluids gesteuert ausgenommen werden,
Fig. 1j schematisch eine Draufsicht der Melkstation, wobei zumindest mehrere Transporteinheiten und Reinigungseinheiten vorgesehen sind, um zumindest zwei Melkplätze gleichzeitig zu bearbeiten,
Fig. 1k schematisch eine Seitenansicht weiterer Ausführungsformen der Melkstation, wobei ein Bedienertransport während der Melkvorgänge durch zumindest einen Teil der Transporteinheit der Reinigungseinrichtung möglich ist,
Fig. 1l schematisch eine um 90 Grad gedrehte Seitenansicht der Melkstation aus Fig. 1k,
Fig. 1m eine weitere Seitenansicht, in der eine "Fahrstellung" der Reinigungseinrichtung dargestellt ist und
Fig. 1n bis 1p diverse Darstellungen, in der entsprechende Reinigungspositionen eingenommen werden, um einen Melkplatz und einen entsprechenden Zugang zu reinigen.

Fig. 1 a zeigt schematisch eine Draufsicht einer Melkstation 100, in der eine erfindungsgemäße Reinigungseinrichtung 150 eingerichtet ist. In diesem Zusammenhang ist die Melkstation 100 als eine Anordnung zu verstehen, in der mehrere Melkplätze, die als 130a, 130b bezeichnet sind, so eingerichtet sind, dass diese während des Betriebs der Station 100 zum Ausführen von Melkvorgängen durch entsprechende Tiere besetzt werden können, die Zugang über entsprechende Zugänge 110b, 110a zu den Melkplätzen 130a bzw. 130b erhalten. Die geometrische Anordnung der Melkplätze 130a, 130b ist dabei unerheblich und ist in der Regel so gestaltet, dass eine möglichst effiziente Überwachung und Bearbeitung durch einen oder mehrere Bediener möglich ist. In dem in Fig. 1 a dargestellten Ausführungsbeispiel umfasst die Melkstation 100 die mehreren Melkplätze 130a, 130b in Form einer doppelreihigen geradlinigen Anordnung, wobei ein Wartungs- bzw. Bedienbereich oder Gang 120 zwischen den jeweiligen Reihen 130a, 130b aus Melkplätzen angeordnet ist. Ferner sind in dieser Anordnung die entsprechenden Zugänge 110a, 110b parallel zu den jeweiligen Melkplätzen angeordnete. Die Anzahl der Melkplätze 130a, 130b in einer entsprechenden Reihe kann variieren und ist in der Regel der Größe des entsprechenden Agrarbetriebs angepasst. Beispielsweise sind etwa vier bis acht oder auch mehr Melkplätze pro Reihe vorgesehen. Vorteilhaft bei der in Fig. 1a dargestellten Anordnung der Melkplätze 130a, 130b ist deren stationäre Anordnung, wobei dennoch die entsprechenden zurückzulegenden Strecken für einen Bediener oder auch für die Reinigungseinrichtung 150 relativ gering sind. In anderen Ausführungsformen, wie dies später beschrieben ist, können auch andere geometrische Anordnungen und nicht stationäre Melkplätze 130a, 130b vorgesehen sein.

In der gezeigten Ausführungsform ist die Reinigungseinrichtung 150 somit im Bereich des Wartungs- bzw. Bediengangs 120 vorgesehen, so dass sich eine gute Zugänglichkeit zu den einzelnen Melkplätzen 130a, 130b und auch zu den Zugängen 110a, 110b während des Betriebs der Reinigungseinrichtung 150 ergibt. Die Einrichtung 150 umfasst eine Reinigungseinheit 170, die in einigen Ausführungsformen ausgebildet ist, zumindest ein geeignetes Reinigungsfluid, etwa in Form einer Flüssigkeit, eines Gases, oder einer Kombination davon in einer lokal beschränkten Weise auszugeben. Dazu weist die Reinigungseinheit 170 eine geeignete ausgebildete Düseneinheit mit einer oder mehreren Öffnungen, etc. auf. In anderen Ausführungsformen ist zusätzlich oder alternativ zu entsprechenden Auslassdüsen für ein Reinigungsfluid eine geeignete Vorrichtung vorgesehen, in der beispielsweise Ultraschall, etc. auf eine zu reinigende Oberfläche, beispielsweise eine Seitenwand 111 des Zugangs 110a angewendet werden kann. In noch weiteren Ausführungsbeispieien wird zusätzlich oder alternativ zur Ausgabe eines Reinigungsfluids mittels einer Düse eine mechanische Reinigungskomponente 171 vorgesehen, etwa in Form einer Bürsteneinheit, und dergleichen, um eine zu reinigende Oberfläche mechanisch zu kontaktieren, so dass eine sehr effiziente lokal begrenzte Reinigungswirkung entfaltet wird. Zu beachten ist, dass die Reinigungseinheit 170 auch entsprechende Einrichtungen aufweist, um damit ein oder mehrere Reinigungsfluide auszugeben, Energie für Ultraschallanwendungen abzugeben, eine mechanische Kontaktierung zu ermöglichen, und dergleichen, die hier nicht detailliert beschrieben sind. Beispielsweise können entsprechende Zuleitungen mittels einer Transporteinheit 180 mitgeführt werden, so dass diese entsprechenden Zuleitungen mit der Reinigungseinheit 170 mechanisch in Kontakt sind. Die Transporteinheit 180 ist ferner in geeigneter Weise ausgebildet, die Reinigungseinheit 170 an mehreren Reinigungspositionen 102a, 102b anzuordnen, um damit zumindest die Melkplätze 130a, 130b zu reinigen und, in einigen Ausführungsformen, wie dies auch in Fig. 1a gezeigt ist, insbesondere kritische Bereiche in den Zugängen 110a, 110b, etwa die Seitenwände 111, zu reinigen, d. h. mit einem Reinigungsfluid zu benetzen und/oder einen mechanischen Kontakt oder eine andere Reinigungswirkung lokal begrenzt zu entfalten. Des weiteren ist die Transporteinheit 180 speziell ausgestaltet, die Reinigungseinheit 170 an einer oder mehreren Neutralposition 103a anzuordnen, die so gewählt sind, dass eine Kontamination während der Melkvorgänge in den Melkplätzen 130a, 130b im Wesentlichen ausgeschlossen ist. D. h., die Neutralposition 103a oder auch weitere Neutralpositionen 103b, die etwa durch ein paralleles Verschieben der Einrichtung 150 entlang des Bediengangs 120 eingenommen werden können, sind während des Melkbetriebs ausreichend weit von den Melkplätzen 130a, 130b entfernt, so dass eine tierbedingte Verschmutzung nahezu ausgeschlossen ist. Des weiteren ermöglichen die Neutralpositionen 103a, 103b einen uneingeschränkten Zugang zu den Melkplätzen 130a, 130b während der Durchführung von Melkvorgängen, so dass in dieser Betriebsphase der Melkstation 100 keinerlei Beeinträchtigungen des Durchsatzes erfolgen.

Die Einrichtung 150 umfasst ferner eine Steuereinheit 160, die geeignet ausgebildet ist, zumindest die Transporteinheit 180 anzuweisen, die Neutralpositionen 103a, 103b oder die Reinigungspositionen 102a, 102b anzufahren und an den Reinigungspositionen 102a, 102b zumindest ein Reinigungsfluid auszugeben. Zu diesem Zweck ist in der Steuerungseinheit 160 ein geeigneter Steuerungsalgorithmus implementiert, der auf der Grundlage eines Aktivierungssignals 161 zumindest den Übergang von einer der Neutralpositionen 103a, 103b in die Reinigungspositionen 102a, 102b in automatisierter Weise veranlasst. Das Aktivierungssignel 161 kann dabei ein "externes" Signal sein, das etwa durch einen Bediener ausgelöst wird, um den automatisierten Reinigungsvorgang in Gang zu setzen, wobei bei Bedarf eine geeignete Verifizierung des externen Aktivierungssignals 161 implementiert sein kann, um mögliche unzulässige Betriebszustände für das Reinigen der Melkstation 100 zu unterbinden. Beispielsweise kann die Auswertung entsprechender Sensordaten angewendet werden, um die "Zulässigkeit" des extern ausgelösten Aktivierungssignals 161 zu prüfen. So kann beispielsweise eine Aktivierung der Transporteinrichtung 180 durch die Steuereinheit 160 unterbunden werden, solange sich noch Tiere oder Personen im Bereich der Melkstation 100 befinden, sofern dies als ein unzulässiger Zustand erachtet wird.

In anderen Ausführungsformen kann zusätzlich oder alternativ zu dem externen Aktivierungssignal 161 auch ein internes Aktivierungssignal in der Steuereinheit 160 erzeugt werden, um damit die automatischen Steuerungsabläufe für den Reinigungsprozess auszulösen. Dazu können etwa, beispielsweise im Zusammenhang mit einem externen Aktivierungssignal, Zeitdaten verwendet werden, um die Zulässigkeit eines Reinigungsprozesses zu bewerten. In anderen Situationen werden sensorische Daten, wie dies nachfolgend detaillierter beschrieben ist, ausgewertet, um das Aktivierungssignal 161 in Form eines internen Signals zu erzeugen. Beispielsweise kann der aktuelle Kontaminationsgrad der Melkstation 100 oder von Teilbereichen davon mittels entsprechender Sensorsysteme erfasst und zur Erzeugung des Aktivierungssignals 161 verwendet werden. In einer anschaulichen Ausführungsform werden beim Betreiben der Melkstation 100 zunächst Tiere mittels der Melkplätze 130a, 130b gemolken, wobei dies in einer semiautomatisierten Weise erfolgen kann, beispielsweise durch Anrüsten von Melkgeschirren durch einen oder mehrere Bediener, wie dies auch nachfolgend noch detaillierter erläutert ist. Nachdem eine entsprechende Anzahl an Tieren gemolken wurde, kann dann das Aktivierungssignal 161 extern oder intern oder in Kombination erzeugt werden, so dass daraufhin die Steuereinheit 160 veranlasst wird, geeignete Steuerdaten zu erzeugen, um die Transporteinrichtung 180 zu veranlassen, die Reinigungseinheit 170 von einer der Neutralpositionen 103a, 103b, die während der Melkvorgänge eingenommen wurden, in die mehreren Reinigungspositionen 102a, 102b bringen, um damit eine lokale Beaufschlagung von zu reinigenden Oberflächen mittels Fluid und/oder mechanischen Kontakt zu ermöglichen. Die Anzahl der möglichen Reinigungspositionen wird dabei von der Steuereinheit auf der Grundlage eines Satzes an vordefinierten Koordinaten und/oder auf der Grundlage aktuell ermittelter Koordinaten festgelegt, dass sich die gewünschte Reinigungswirkung ergibt. D. h., im Gegensatz zu konventionellen Strategien, in denen typischerweise manuelle Reinigungsprozesse ausgeführt werden, lassen sich durch die Steuerung 160 in genau vorhergesagter Weise die gewünschten Reinigungspositionen 102a, 102b unter Zugrundelegung der hinterlegten oder erzeugten Koordinatendatensätze anfahren, so dass eine gewünschte Abdeckung erreicht wird, wobei auch zusätzlich die Intensität der Reinigungswirkung geeignet steuerbar ist durch Auswahl eines geeigneten Reinigungsfluids, durch Einstellen der Länge der Beaufschlagung an einer Position, und dergleichen. Dabei werden die Bewegungen der Transporteinheit 180 der gegebenen Gerätekonfiguration der Melkstation 100 geeignet angepasst, beispielsweise durch entsprechend implementierte Lernmechanismen in der Steuereinheit 160 und/oder durch Sensormessdaten, wie dies nachfolgend auch detaillierter beschrieben ist. Insbesondere durch Berücksichtigung entsprechender Sensordaten für die Ermittlung von Steuerungsdaten für die Reinigungspositionen 102a, 102b kann eine unerwünschte Kollision mit Gerätkomponenten, oder auch Bedienern und Tieren, falls diese in gewissen Bereichen der Station 100 vorhanden sind, vermieden werden.

Fig. 1b zeigt schematisch eine Seitenansicht der Melkstation 100 in einer Ausführungsform, in der die Einrichtung 150 als eine "deckengestützte" Einrichtung vorgesehen ist, wobei etwa eine Führungsschiene 181, möglicherweise in Verbindung mit einer Antriebskomponente, im Eingriff ist mit einer Subeinheit 180b der Transporteinheit 180, um etwa eine grobe Positionierung der Einrichtung 150 als ganzes über dem Wartungsgang 120 zu ermöglichen. D. h., mit der Subeinheit 180b kann eine Bewegung in Längsrichtung der Station 180 erfolgen, d. h. Fig. 1b entlang einer Richtung senkrecht zur Zeichenebene, so dass beispielsweise einen Positionierung zu einem der Melkplätze 130a, 130b möglich ist. Ferner ist in der dargestellten Ausführungsform eine weitere Subeinheit 180a der Transporteinheit 180 dargestellt, die für die "Feinpositionierung" der Reinigungseinheit 170 zuständig ist, so dass diese in die jeweiligen gewünschten Positionen 102a, 102b gebracht werden kann. In der gezeigten Situation befindet sich die Reinigungseinheit 170 in der Reinigungsposition 102b, die geeignet ist, ein Reinigungsfluid 172 innerhalb eines der Melkplätze 130b auszugeben. Durch geeignetes Vorgeben weiterer Reinigungspositionen kann somit in zuverlässiger Weise jede gewünschte Komponente, etwa Seitenwände 131 oder ein Boden 132 der jeweiligen Melkplätze 130a, 130b mit dem Fluid 172 beaufschlagt werden. Wie zuvor mit Bezug zu Fig. 1 a erläutert ist, kann zusätzlich zu dem Fluid 172 auch ein mechanischer Kontakt mit einer Reinigungskomponente herbeigeführt werden, oder es kann eine Beaufschlagung mit Ultraschall, und dergleichen angewendet werden. Wie zuvor erläutert ist, kann die Transportsubeinheit 180a entsprechende mechanische Komponenten, beilspielsweise in Form von Hebeln, Teleskoparmen, Bewegungszylindern, und dergleichen aufweisen, die der Einfachheit halber schematisch als 183, 184 bezeichnet sind, so dass eine gewünschte "Abdeckung" im Bezug auf die Reinigungswirkung für zu reinigende Oberflächen der Melkplätze 130a, 130b und auch der Zugänge, etwa des Zugangs 110b, erreicht wird. Typischerweise kann das Fluid 172 über den Boden 132 der Melkplätze 130b oder auch über den Boden 112 der Zugänge 110b geeignet abfließen. Ferner kann bei Bedarf die Einrichtung 150 auch so ausgebildet sein, dass die diversen Reinigungspositionen auch zumindest Teile des Bediengangs 120 erfassen, so dass auch dieser bei Bedarf automatisch gereinigt werden kann.

Fig. 1c zeigt schematisch die Melkstation 110, wobei die Transporteinheit 180 und somit die Reinigungseinheit 170 sich in einer der Neutralpositionen, die durch 103a benannt ist, befindet. In dieser Position sind die Melkplätze 130b über den Bediengang 120 gut zugänglich, so dass ein Bediener entsprechende manuelle Eingriffe am Melkvorgang, etwa das Anrüsten des Melkgeschirrs, das Abnehmen des Melkgeschirrs, etc. ohne Beeinflussung durch die Einrichtung 150 vornehmen kann. Andererseits wird insbesondere die Reinigungseinheit 170 selbst oder auch die gesamte Einrichtung 150 vor einer tierbedingten Kontamination zuverlässig geschützt auf Grund des relativ großen Abstandes der Einrichtung 150 und auf Grund der Anbringung an der Decke der Melkstation 100. Fig. 1d zeigt schematisch die Melkstation 100 gemäß weiterer anschaulicher Ausführungsformen, in denen die Einrichtung 150 als eine bodengestützte Einrichtung vorgesehen ist, die etwa mittels Schienen oder frei beweglicher Rollen auf den Boden 121 des Bedienganges 120 verfahrbar angeordnet ist. Auch hier sind die Transporteinheit und damit die Reinigungseinheit 170 in einer Neutralstellung gezeigt, in der eine Kontamination während des Melkbetriebs im Wesentlichen ausgeschlossen wird. Es sollte beachtet werden, dass die Einrichtung 150 dabei so positioniert sein kann, dass die Zugänglichkeit der Melkplätze 130b während des Melkvorganges nicht beeinträchtigt ist. Dazu kann etwa die Einrichtung 150 über die Erstreckung der Melkplätze 120b hinaus in der Neutralstellung positioniert werden und wird bei der automatischen Reinigung sodann über die Transporteinrichtung 180 entsprechend an den jeweiligen Melkplätzen 130b positioniert. In anderen Ausführungsformen kann die Einrichtung 150 und insbesondere deren Transporteinheit 180 auch gleichzeitig zum Transport eines Bedieners verwendet werden, so dass in diesem Falle eine Beeinträchtigung des Melkvorgangs durch die bodengestützte Einrichtung 150 nicht vorliegt, sondern im Gegenteil eine Effizienzsteigerung durch die doppelte Nutzung der Transporteinheit 180 ermöglicht wird.

Fig. 1e zeigt schematisch die Melkstation 100 gemäß einer Ausführungsform, in der die Melkplätze 130b in Form eines "Melkkarussells" angeordnet sind. In dieser Ausführungsform sind somit die Melkplätze 130b drehbar und somit nicht stationär aufgebaut, so dass zumindest einige der Melkplätze 130b über den Bediengang 120 während des Melkvorganges zugänglich sind. In der gezeigten Ausführungsform ist dabei die Reinigungseinrichtung 150 so ausgebildet, dass diese temporär mit einem Melkplatz koppelbar ist, beispielsweise über eine Subeinheit 180d der Transporteinheit, so dass die Einrichtung 150 von dem jeweiligen Melkplatz 130b mitgeführt wird und in dieser Zeit eine effiziente automatisierte Reinigung des Melkplatzes ermöglicht wird. Nach einer vorgegebenen Strecke kann die Einrichtung 150 mittels der Subeinheit 180d abgekoppelt und wieder über eine entsprechende Transportstrecke zum Ausgangspunkt in dem Bediengang 120 zurückgeführt werden, wie dies durch die gestrichelte Linie angezeigt ist, so dass dann eine Kopplung an einen weiteren Melkplatz ermöglicht wird, der dann wiederum automatisch gereinigt wird. Im Hinblick auf die weiteren Komponenten der Einrichtung 150 gelten die gleichen Kriterien, wie sie auch zuvor dargestellt sind, wobei insbesondere geeignete Reinigungspositionen nach erfolgter Kopplung durch die Subeinheit 180d innerhalb eines jeweiligen Melkplatzes angefahren werden, um eine effiziente Beaufschlagung mit Fluid und/oder eine mechanische Reinigung zu erreichen.

Fig. 1f zeigt schematisch einen Steuerungsablauf 160a, der in einigen anschaulichen Ausführungsformen in der Steuereinheit 160 (siehe Fig. 1 a) eingerichtet ist. Zu diesem Zweck kann die Steuereinheit geeignete Mittel aufweisen, etwa in Form einer Mikrosteuerung, in der geeignete Speicher vorgesehen sind, die entsprechende Daten für den Steuerungsablauf enthalten. Es sollte jedoch beachtet werden, dass entsprechende elektronische Steuerungseinheiten auch fest verdrahtete logische Funktionen aufweisen können, die geeignet sind, um einen gewünschten Steuerungsablauf, etwa den Ablauf 160a einzurichten. In dem gezeigten Ausführungsbeispiel wird in einem ersten Schritt 161 a des Ablaufs 160a geprüft, ob ein Aktivierungssignal vorhanden ist, das als Auslöser zum Initiieren eines Reinigungsprozesses verwendet wird. Wenn dies nicht der Fall ist, verbleibt etwa der Ablauf 160a in einer entsprechenden Warteschleife. Wenn ein Aktivierungssignal erkannt wurde, kann gemäß einer anschaulichen Ausführungsform im Schritt 162a geprüft werden, ob der Zustand der Melkstation mit dem Ausführen eines Reinigungsprozesses kompatibel ist. D.h., im Schritt 162a kann der Stationszustand verifiziert werden, um zu entscheiden, ob der aktuelle Stationszustand für das Ausführen eines Reinigungsprozesses geeignet ist. Bei diesem Verifizierungsschritt können diverse Prüfungen vorgenommen werden, es können etwa sensorische Daten erfasst und ausgewertet werden, etc. wie dies auch nachfolgend detaillierter beschrieben ist. Wenn die Verifizierung im Schritt 162a nicht erfolgreich ausfällt, wird zum Schritt 161a zurückgekehrt. Im anderen Falle wird im Schritt 163a ein Satz an Ansteuerdaten für die Transporteinheit bereitgestellt, so dass die mehreren Reinigungspositionen angefahren werden können. Die Ansteuerdaten können im Schritt 163a aus einem geeigneten Speicher abgerufen werden, wenn die jeweiligen Reinigungspositionen bereits im Voraus präzise definiert sind. In anderen Fällen kann alternativ oder zusätzlich zu bereits fest eingespeicherten Ansteuerdaten eine geeignete aktuelle Ermittlung von Ansteuerdaten erfolgen, wobei unter Umständen geeignete Sensordaten verwendet und ausgewertet werden, und dergleichen. Die Ansteuerdaten im Schritt 163a können so erstellt oder so hinterlegt sein, dass eine gewünschte hohe Abdeckung für die zu reinigenden Oberflächen erreicht wird und gleichzeitig eine zeiteffiziente Ausführung des Reinigungsprozesses erfolgen kann. Auf der Grundlage der Ansteuerdaten werden im Schritt 163a gleichzeitig entsprechende Signale von der Steuereinheit der Transporteinheit zugeleitet, so dass die Ansteuerdaten, die den jeweiligen Koordinaten der Reinigungspositionen entsprechen, tatsächlich angefahren werden. Im Schritt 164a wird nach Anfahren einer entsprechenden Reinigungsposition die Reinigungseinheit angewiesen, das Reinigungsfluid geeignet auszugeben, wobei dies die Auswahl eines geeigneten Fluids, die zeitliche Dauer der Ausgabe, gewisse Zustände des Ausgebens, beispielsweise der Ausgabedruck, und dergleichen beinhalten kann. Zu diesem Zweck kann die Reinigungseinrichtung entsprechende Mittel aufweisen, um etwa ein oder mehrere Fluide auszugeben oder ein Basisreinigungsfluid mit diversen Zusätzen zu versehen, um damit eine effiziente Reinigungswirkung zu entfalten. Beispielsweise kann im Schritt 164a bestimmt werden, welche Mengen unter welchem Druck eines Reinigungsfluids ausgegeben werden, wobei die entsprechenden Daten permanent in einem Speicher abgelegt sein können oder wie dies nachfolgend detaillierter erläutert ist, unter Zuhilfenahme der Auswertung sensorischer Messdaten aktuell ermittelt werden. Beispielsweise kann im Schritt 164a die Ansteuerung der Reinigungseinheit unter Auswertung von Messdaten eines Kontaminationserkennungssensors erfolgen, der den lokalen Kontaminationsgrad angibt und damit auch ein Maß ist für die lokal erforderliche Effizienz des entsprechenden Reinigungsvorgangs.

Im Schritt 165a des Ablaufs wird ermittelt, ob weitere Reinigungspositionen angefahren werden müssen, beispielsweise weil die gewünschte Abdeckung der zu reinigenden Oberflächen noch nicht erreicht ist, oder weil die Auswertung von Sensordaten ergibt, dass gewisse Oberflächenbereiche einer weiteren Reinigung bedürfen, und wenn dies der Fall ist, wird zum Schritt 163a zurückgekehrt, um damit die Ansteuerdaten für die Transporteinheit erneut zu erstellen. Wenn im Schritt 165a beurteilt wird, dass keine weiteren Reinigungspositionen anzufahren sind, geht der Ablauf in den Schritt 166a über, der die Ansteuerdaten für die Transporteinheit erstellt, um die Einrichtung oder zumindest die Transporteinheit und die Reinigungseinheit in die Neutralposition zu bringen.

Es ist zu beachten, dass die mehreren Reinigungspositionen auch eine kontinuierliche Strecke von Reinigungspositionen umfassen, wobei etwa nur ein Anfangspunkt, ein Endpunkt und eine diese Punkte verbindende Kurvenform, etwa eine Gerade, von der Steuereinheit festgelegt werden.

Auf Grund der Implementierung eines geeigneten Steuerablaufs, etwa des Ablaufs 160a, in der Steuereinheit wird damit ein hoher Grad an Effizienz und auch ein entsprechend hoher Standard der Hygiene erreicht, da entsprechende bedienerabhängige Einflüsse auf den Reinigungsvorgang vollständig eliminiert werden.

Fig. 1g zeigt schematisch einen Teil eines weiteren Steuerungsablaufs 160b, wie er alternativ oder zusätzlich zu dem Steuerungsablauf 160a in der Steuereinheit implementiert sein kann. In dem Teil des Steuerungsablaufs 160b, der in Fig. 1g gezeigt ist, werden im Schritt 161b Daten erhalten, etwa in Form von Sensordaten, Zeitdaten, etc., die es ermöglichen, den Zustand der Melkstation insbesondere im Hinblick auf einen auszuführenden Reinigungsprozess zu bewerten. Beispielsweise können die Zeitdaten den Zeitpunkt einer jüngsten Reinigung der Melkstation angeben, so dass auf der Grundlage gewisser Vorgaben der Zeitpunkt der nächsten Reinigung bestimmt werden kann. In anderen Ausführungsformen wird zusätzlich zu den Zeitdaten oder alternativ dazu ein Sensordatensatz empfangen und ausgewertet, wobei etwa der Kontaminationsgrad, das Vorhandensein von Bedienpersonal, die Anwesenheit von Tieren, etc. erfasst werden, so dass damit der Zustand der Melkstation bewertet wird. Wenn beispielsweise auf Grund der Sensordaten, etwa in Verbindung mit den Zeitdaten erkannt wird, dass aktuell kein Melkbetrieb ausgeführt wird und auch innerhalb eines vorhersagbaren Zeitraums nicht stattfindet, kann dies ein Bewertungskriterium sein, um einen zulässigen Zustand für einen Reinigungsprozess im Schritt 161b anzugeben. In der gezeigten Ausführungsform wird ferner im Schritt 162b geprüft, ob ein externes Aktivierungssignal vorhanden ist, da beispielsweise bedieneraktiviert ein Reinigungsprozess ausgeführt werden soll. Wenn dies der Fall ist, wird beispielsweise im Schritt 163b geprüft, ob der im Schritt 161b ermittelte Zustand einen Reinigungsprozess zulässt, so dass, wenn dies der Fall ist, im Schritt 165b entsprechende Ansteuerdaten für die Reinigungspositionen ermittelt werden können, wie dies auch zuvor erläutert ist. Wenn etwa im Schritt 162b kein externes Aktivierungssignal vorliegt, wird beispielsweise in der gezeigten Ausführungsform im Schritt 164b bestimmt, ob ein internes Aktivierungssignal zu erzeugen ist. Dazu wird der im Schritt 161b bestimmte Zustand der Melkstation berücksichtigt und wenn dieser als ein für den Reinigungsprozess geeigneter Zustand erkannt wurde, wird im Schritt 164b das interne Aktivierungssignal erzeugt, so dass dann im Schritt 165b entsprechende Ansteuerdaten für die Reinigungspositionen erzeugt werden, wie dies auch zuvor beschrieben ist.

Es ist zu beachten, dass die zuvor beschriebenen Ansteuerabläufe auch viele weitere Optionen beinhalten können, die in Form geeigneter Datensätze in einem Speicher hinterlegt sind oder die auf der Grundlage eines geeigneten grundlegenden Instruktionssatzes aktuell, beispielsweise mittels einer Mikrosteuerung, ermittelt werden können.

Fig. 1h zeigt schematisch die Melkstation 100, wobei ein Sensorsystem 100 vorgesehen ist, das in einer Ausführungsform geeignete Mittel aufweist, um Positionsbestimmungsdaten zu erzeugen und ergänzend oder alternativ dazu in einer anderen Ausführungsform auch Messdaten bereitstellt, die den Grad der Kontamination zumindest in Bereichen der Melkstation 100 beschreiben. In der gezeigten Ausführungsform sind beispielsweise ein oder mehrere Sensoren 191, 192 vorgesehen, die eingesetzt werden können, um den Grad der Kontamination zu ermitteln und/oder die auch eingesetzt werden können, um geeignete Positionsdaten zu erzeugen. Beispielsweise können die Sensoren 191, 192 Teile eines bildgebenden Systems sein, in welchem geeignete Bildaufnahmeeinheiten, etwa in Form von Kameras, und dergleichen, eingesetzt werden, um entsprechende Bilddaten zu erzeugen, die mittels geeigneter Bilderkennungsverfahren ausgewertet werden. Beispielsweise kann durch geeignete Anordnung der Bilderfassungssensoren 191, 192 die Lage und die Größe von Gegenständen in der Melkstation 100 ermittelt werden, wodurch die entsprechenden Daten dann im Steuerungsablauf berücksichtigt werden, um etwa geeignete Reinigungspositionen zu bestimmen, den Zustand der Melkstation 100 anzugeben, etc. Beispielsweise können die entsprechenden Messdaten verwendet werden, um die Reinigungseinheit 170 in geeigneter Weise zu positionieren, so dass etwa eine Kollision mit Gegenständen, Tieren und dergleichen vermieden wird. Auch kann mittels der Sensoren 191, 192 die Wirkung der Reinigungseinheit 170 aktuell geprüft werden oder es kann der Kontaminationsgrad vor dem Aktivieren der Reinigungseinheit 170 bestimmt werden, so dass daraus etwa die Art des Reinigungsfluids, eine mögliche mechanische Kontaktierung, die Dauer der Einwirkung, etc. durch die Steuereinheit ermittelt werden, so dass daraufhin die Einheit 170 geeignet betrieben wird. Die Sensoren 191, 192 können auch in geeigneter Weise die Anwesenheit von Tieren, Personen und dergleichen detektieren, um damit auch den entsprechenden Zustand der Station 100 im Hinblick auf das Ausführen eines vollautomatisierten Reinigungsprozesses zu bestimmen. Beispielsweise werden die Daten verwendet, um die Abwesenheit eines Bedieners zu erkennen um damit eine Freigabe für den Reinigungsprozess zu verknüpfen. In weiteren Ausführungsformen kann zusätzlich oder alternativ zu den Sensoren 191 und 192 ein oder mehrere Sensoren 193 vorgesehen sein, etwa in Form von Positionserfassungssensoren, Annäherungssensoren, und dergleichen, wobei etwa durch Ultraschall ein Abstand zu Objekten bestimmt werden kann, um etwa eine besonders genaue Positionierung der Einheit 170 zu ermöglich und/oder um eine Kollision mit Gegenständen zu vermeiden. Die Daten der Sensoren 191 und/oder 192 und/oder 193 können auch verwendet werden, um aktuell eine geeignete Sequenz aus Reinigungspositionen festzulegen, da mittels dieser Sensoren die Konfiguration der Station 100 in genauer Weise erfasst werden kann, so dass nach Auswertung dieser Daten die Steuereinheit somit geeignete Reinigungspositionen angepasst an die bestehende Konfiguration bestimmen kann.

Durch den Einsatz des Sensorsystems 190 in Form eines Kontaminationserkennungssystems ist es damit möglich, objektive Bewertungsvorgaben festzulegen für den Hygienestatus der Melkstation festzulegen und die Einhaltung dieser Bewertungsvorgaben in automatisierter Form zu ermöglichen, da etwa die Intensität und die Häufigkeit von Reinigungsvorgängen bei Bedarf von der Steuereinheit 160 autonom bestimmt werden können.

Fig. 1i zeigt schematisch die Melkstation 100 in weiteren Ausführungsformen, in denen die Beaufschlagung von Bereichen der Melkstation 100 mittels der Reinigungseinheit, wie dies generell durch 171 angedeutet ist, in besonderer Weise gesteuert ist, so dass empfindliche Bereiche vor einer Beaufschlagung, beispielsweise vor einer Benetzung mit Reinigungsfluid, ausgenommen werden. In der gezeigten Ausführungsform ist dazu etwa ein "Melkgeschirr" 140 vorgesehen, das in der vorliegenden Anmeldung im breiten Sinne so zu verstehen ist, dass dieses mehrere Melkbecher 142 umfasst, die in geeigneter Weise mit einem Melksystem verbunden sind, um damit Milch zu ermelken und diese abzuführen. Beispielsweise kann das Melkgeschirr 140 als eine geeignete Halterung mit angekoppelter Vakuumzufuhr und Fluidableitung vorgesehen sein, wobei die Melkbecher 142 einzeln entnehmbar sind, um von einem Bediener beim Melkvorgang an eine Zitze angelegt zu werden. In einer derartigen Konfiguration ist beispielsweise häufig eine elektronische Steuerung 141 in dem "elektronischen" Melkgeschirr 140 vorgesehen, um diverse Vorgänge darin geeignet zu steuern und zu überwachen. Typischerweise sind entsprechende elektronische Einrichtungen sensibler im Hinblick auf die Beaufschlagung mit Reinigungsfluiden, so dass in der vorliegenden Ausführungsform die Beaufschlagung 171 so erfolgt, dass gewünschte Fläche effizient gereinigt werden, etwa Seitenwände 111, der Boden 112 und dergleichen, wobei auch Teile des Melkgeschirrs 140 gereinigt werden können. Andererseits bleibt jedoch aufgrund der lokal beschränkten und gesteuerten Ausgabe des Reinigungsfluids 171 der Bereich 141 ausgenommen. Dies gelingt beispielsweise dadurch, dass der Bereich 141 bei der Ermittlung geeigneter Reinigungspositionen berücksichtigt wird und zugehörige Koordination bei der Erstellung der Ansteuerdaten ausgespart werden. Dabei kann der Bereich 141, wenn dieser einer stets festgelegten Position entspricht, fest in einem entsprechenden Datensatz hinterlegt sein, während in andere Ausführungsform die Position des Bereichs 141 aktuell erfasst wird, beispielsweise mittels entsprechender Sensoren, wie dies zuvor erläutert ist, so dass dann die aktualisierten Positionsdaten der aktuellen Lage des Bereichs 141 angepasst sind. Auf diese Weise kann eine gewünschte effiziente Spülung oder Reinigung beispielsweise der Melkbecher 142 erfolgen, ohne dass jedoch empfindliche Bereiche des Melkgeschirrs 140 benetzt werden.

Fig. 1j zeigt schematisch eine Draufsicht der Melkstation 100 gemäß einer Ausführungsform, in der die Einrichtung 150 zumindest mehrere individuell ansteuerbare Einrichtungen 150a ... 150d aufweist, die etwa zentral von der Steuereinheit 160 gesteuert werden, oder die jeweils eine eigene zugehörige Steuereinheit aufweisen. Die entsprechenden Einrichtungen 150a ... 150d weisen geeignete Mittel auf, etwa in Form einer Transporteinheit und einer Reinigungseinheit, wie dies auch zuvor beschrieben ist, so dass jeweils ein oder mehrere Melkplätze 130a, 130b und zugehörige Bereiche der Zugängen 110a, 110b durch eine jeweilige Einrichtung 150a ... 150d gereinigt werden können. In der gezeigten Ausführungsform ist jeweils zwei gegenüberliegenden Melkplätzen der Reihen 130a, 130b eine entsprechende Einrichtung 150a zugeordnet, wobei die entsprechende Einheit so ausgebildet sein kann, dass eine Reinigungseinheit sequentiell in den beiden zugehörigen Melkplätzen positionierbar ist oder es sind zwei Reinigungseinheiten mit entsprechenden Transporteinheiten vorgesehen, so dass die jeweiligen gegenüberligenden Melkplätze auch gleichzeitig von der jeweiligen Einrichtung 150a ... 150d bearbeitet werden können. In jedem Falle kann durch die Einrichtung 150 eine Reinigung mindestens zweier Melkplätze gleichzeitig erfolgen, so dass insgesamt eine sehr effiziente Reinigungsprozedur ergibt, wobei auch ein hohes Maß an Flexibilität bei der lokalen Auswahl entsprechender Melkplätze erreicht wird. D.h. die Einrichtung 150a ... 150d können so angeordnet, dass sie während des Melkvorgangs nicht störend sind, aber bei Erkennen eines Reinigungsbedarfs in einem der Melkplätze 130a, 130b dennoch eine lokale Reinigung vorgenommen werden kann. Dabei wird jedoch der Melkbetrieb in anderen Melkplätzen nicht nennenswert beeinflusst. Damit ist es möglich, bei Erkennen einer starken Kontamination eines oder mehrerer der Melkplätze während des Melkbetriebs, etwa durch das Sensorsystem aus Fig. 1h, eine lokale Zwischenreinigung durchzuführen, so dass gegebenenfalls dieser Melkplatz nach erfolgter Zwischenreinigung, die beispielsweise auf der Grundlage einiger weniger Reinigungspositionen durchgeführt werden kann, wieder verfügbar ist, so dass dennoch ein hoher Durchsatz erreicht wird, und ein hoher Hygienestandard beibehalten wird, selbst wenn eine sehr hohe Kontamination temporär erfolgt, die konventioneller Weise zu Qualitätseinbußen führt oder zum Eingreifen eines Bedieners zwingt und dadurch den Durchsatz verringert.

Mit Bezug zu den Fig. 1k bis 1p werden nunmehr weitere anschauliche Ausführungsformen beschrieben, in denen die Reinigungseinrichtung verwendet wird, um die Effizienz des Melkvorgangs in der Melkstation zu erhöhen.

Fig. 1k zeigt schematisch eine Seitenansicht der Melkstation 100, wobei die Einrichtung 150 mit einer Aufnahme 151 versehen ist, in der ein Bediener in geeigneter Position, beispielsweise in sitzender Position, aufgenommen wird, um damit zu einem Melkplatz 130b transportiert zu werden, der ein manuelles Eingreifen durch den Bediener erfordert. Dazu ist die Transporteinheit 180 der Einrichtung 150 entsprechend ausgebildet, so dass etwa die Subeinheit 180b das Positionieren der Aufnahme 151 in geeigneter Weise in Bezug auf einen jeweiligen Melkplatz 130b ermöglicht. Zu diesem Zweck kann die Steuereinheit der Einrichtung 150 entsprechend erweitert sein, so dass während des Melkbetriebs in der Station 100 Positionsbefehle erzeugt oder empfangen werden, die dann in geeignete Positionsdaten umgerechnet werden, um die Einheit 180b anzuweisen, die Aufnahme 151 an dem gewünschten Melkplatz zu positionieren. Dabei wird die Transpostsubeinheit 180a so gesteuert, dass die Reinigungseinheit 170 in der Neutralposition 102a bleibt, so dass eine Kontamination vermieden wird, und eine Beeinflussung des Melkvorgangs durch die Reinigungseinheit 170 ausgeschlossen ist. In der gezeigten Ausführungsform ist etwa die Transportsubeinheit 180a in Form diverser mit Gelenken verbundenen Auslegern und Bewegungszylindern ausgeführt, an deren Ende die Einrichtung 170 angeordnet ist. Die Subeinhit 180b ihrerseits ist entsprechend ausgebildet, einen Transport in Längsrichtung, d.h. in einer Richtung senkrecht zu Zeichenebene der Fig. 1k, sowie eine Bewegung in lateraler Richtung, d.h. in der horizontalen Richtung der Fig. 1k, zu ermöglichen. Ferner ist die Subeinheit 180b auch ausgebildet, eine Drehung der Subeinheit 180a entsprechend einer Achse senkrecht zum Bedienungsgang 120 zu ermöglichen, so dass auch die Einrichtung 170 und die Bedieneraufnahme 151 entsprechend gedreht werden können. Beispielsweise entspräche eine Drehung um 180° einer Situation, in der die Aufnahme 151 einem Melkplatz gegenüberliegend zu dem Platz 130b zugewandt ist.

Fig. 1l zeigt schematisch eine Seitenansicht der Melkstation 100, wobei sich die Aufnahme 151 in der "Melkstellung" befindet, wie dies auch in Fig. 1k gezeigt ist. D.h. die Aufnahme 151 und damit auch ein sich darauf befindlicher Bediener sind vor einem entsprechenden Melkplatz 130b positioniert und sind diesem zugewandt, so dass entsprechende Handlungen, etwa das Ansetzen eines Melkgeschirrs, wie es beispielsweise zuvor erläutert ist, oder das Abnehmen des Melkgeschirrs durchgeführt werden. Auf der Grundlage eines Positioniersignals kann sodann ein anderer Melkplatz angefahren werden, wobei die Vorgabe entsprechender Positionssignale so erfolgen kann, dass sich insgesamt ein optimierter Betrieb der Melkstation 100 ergibt. D.h. zusätzlich zu der Effizienzsteigerung, die durch das Vorsehen der Aufnahme 151 in der Einrichtung 150 erreicht wird, kann durch geeignete Auswahl von Positioniersignalen während des Melkbetriebs eine weitere Effizienzsteigerung erreicht werden, da gegebenenfalls das Anfahren der einzelnen Melkplätze aufgrund von Informationen erfolgen kann, die dem Bediener in den konventionellen Einrichtungen nicht zur Verfügung stehen oder die der Bediener nicht ein geeigneter Weise verarbeiten kann, um einen optimierte Ablauf des Melkvorgangs zu erreichen.

Fig. 1m zeigt die Melkstation 100 in einer weiteren schematischen Seitenansicht, wobei nunmehr die Aufnahme 151 und damit auch die Transportsubeinheit 180a um 90° gegenüber der Stellung der Fig. 1l gedreht sind, was beispielsweise günstig ist beim Verfahren der Einrichtung 150 von einem Melkplatz zu einem weiteren. Ferner befindet sich in dieser Stellung die Subeinheit 180a und damit die Aufnahme 151 im Wesentlichen in der Mitte zwischen den entsprechenden Melkplatzreihen, so dass auch hier eine Bewegung ohne Gefahr einer Kontamination stattfinden kann. Ferner wird dabei die Gefahr einer Verletzung des Bedieners während des Melkbetriebs vermieden.

Bei einem Betrieb der Melkstation kann somit der Bediener mit der Aufnahme 151 in geeigneter Weise vor den jeweiligen Melkplätzen positioniert werden, ohne dass eine Behinderung durch die Reinigungskomponenten der Einrichtung 150 erfolgt. Nach Beendigung des Melkvorgangs und Verlassen der Aufnahme 151 durch den Bediener steht somit die Einrichtung 150 für den eigentlichen Reinigungsprozeß zur Verfügung. Dazu kann beispielsweise ein externes Aktivierungssignal erzeugt werden, etwa durch einen Bediener, wobei entsprechende weitergehende Statusverifizierungen folgen können, wie dies auch zuvor erläutert ist. In einer anschaulichen Ausführungsform wird dabei sichergestellt, dass kein Bediener in der Aufnahme 151 anwesend ist, so dass die Einrichtung 150 ohne Einschränkungen für den eigentlichen Reinigungsprozeß verwendet werden kann.

Fig. 1n zeigt schematisch die Station 100 während der Reinigungsphase, die in der gezeigten Ausführungsform nach einer Phase erfolgt, in der sämtliche Melkprozesse beendet sind, und der Bediener die Aufnahme 151 verlassen hat. Wie gezeigt, wird dabei die Einrichtung 150 als ganzes mittels der Subeinheit 180b in geeigneter Weise vor einem zu reinigenden Melkplatz 130b positioniert, wobei dann die Subeinheit 180a die gewünschten Reinigungspositionen 102a anfährt. Im Hinblick auf die Erzeugung entsprechender Ansteuerungsdaten sei auf die zuvor beschriebenen Ausführungsformen verwiesen.

Fig. 1o zeigt schematisch die Melkstation 100, wobei die Reinigungseinheit 170 so positioniert ist durch die Subeinheit 180a, dass auch Bereiche des Zugangs 110b effizient gereinigt werden können. Beispielsweise können damit effizient die Seitenwände der Zugänge 110b mit Fluid beaufschlagt werden, oder es können mechanische Reinigungskomponenten zum Einsatz kommen, wie dies auch zuvor beschrieben ist.

Fig. 1p zeigt eine schematische Ansicht der Melkstation 100, in der zuvor in Fig. 1n gezeigten Situation, in der die Reinigungseinheit 170 in geeigneter Weise positioniert ist, um einen Bereich außerhalb einer entsprechenden Melkzelle zu reinigen. Dazu wird die Einheit 170 durch die Subeinheit 180a durch den entsprechenden Melkplatz durchgeführt.

In den zuvor genannten Ausführungsformen kann somit die Einrichtung 150 effizient auch während des Melkvorgangs verwendet werden, indem eben ein Bediener in geeigneter Weise an den Melkplätzen positioniert wird, während gleichzeitig die Kontamination und jeglicher störenden Einfluß der Reinigungseinheit vermieden wird. Andererseits kann nach Ablauf der Melkvorgänge ein vollautomatisierter effizienter Reinigungsprozeß durchgeführt werden, wobei zumindest die Gerätekomponenten der Transporteinheit ebenfalls effizient angewendet werden und damit insgesamt den Aufwand an erforderlichen mechanischen Komponenten verringern. In den zuvor gezeigten Ausführungsformen für die "Doppelnutzung" der Reinigungseinrichtung ist ein deckengestütztes Transportsystem in Form der Einheit 180 gezeigt, während in anderen Ausführungsformen auch ein bodengestütztes System Verwendung finden kann, wie es beispielsweise grundsätzlich in Fig. 1d dargestellt ist. Dabei kann ein bodengestütztes Schienensystem verwendet werden oder auch ein frei steuerbares Fahrzeug, das dann zumindest in der Reinigungsphase zumindest das Anfahren geeigneter Reinigungspositionen in vollautomatisierter Weise ausführt.

In den zuvor mit Bezug zu den Figuren 1k bis 1o dargestellten Ausführungsformen ist eine Kombination der Reinigungseinrichtung mit der Komponente 151 gezeigt, die fest mit der Einrichtung 150 verbunden ist oder in anderen Ausführungsformen bei Bedarf an die Einrichtung 150 angekoppelt wird. Dies kann durch geeignete Mittel erfolgen, etwa durch automatische Kupplungen oder auch unter Einwirkung eines Bedieners. In anderen Ausführungsformen ist die Komponente 151 in Form einer Vorrichtung zum automatischen Ansetzen eines Melkgeschirrs vorgesehen, so dass auch in diesem Falle eine deutliche Effizienzsteigerung des Melkvorgangs erreicht und gleichzeitig der apparative Aufwand reduziert wird. Auch in diesem Falle kann die Vorrichtung dauerhaft mit der Einrichtung 150 verbunden sein, oder die Vorrichtung wird bei Bedarf automatisch oder auch manuell angekoppelt und abgekoppelt.

## Patentansprüche

1. Einrichtung (150) zur Reinigung von Melkplätzen (130a, 130b), mit
einer Reinigungseinheit (170), die ausgebildet ist, ein Prozessfluid steuerbar auszugeben,
einer Transporteinheit (180), die ausgebildet ist, die Reinigungseinheit (170) steuerbar in mindestens eine Neutralposition (103a, 103b) zu bringen, in der die Reinigungseinheit (170) beim Melken von Tieren in den Melkplätzen nicht durch die Tiere kontaminierbar ist, und die Reinigungseinheit (170) steuerbar in mindestens eine Reinigungsposition (102a, 102b) zur Reinigung der Melkplätze zu bringen, und
einer Steuereinheit (160), die in Funktionsverbindung mit der Reinigungseinheit (170) und der Transporteinheit (180) steht und einen implementierten Steuerungsalgorithmus aufweist, der auf der Grundlage eines Aktivierungssignals die Transporteinrichtung (180) veranlasst, die Reinigungseinheit (170) in die mindestens eine Neutralposition (103a, 103b) oder die mindestens eine Reinigungsposition (102a, 102b) zu bringen,
wobei die Einrichtung (150) ferner eine Bediener-Aufnahme (151) aufweist, die mit der Transporteinheit (180) so verbunden ist, dass die Bediener-Aufnahme (151) zur Abwicklung eines Melkvorgangs an jeweils jeden des einen oder der mehreren Melkplätze (130a, 130b) heran geführt werden kann.

2. Einrichtung (150) zur Reinigung von Melkplätzen (130a, 130b) nach Anspruch 1, wobei der Steuerungsalgorithmus ferner ausgebildet ist, die Reinigungseinheit (170) zu veranlassen, das Reinigungsfluid an einer Vielzahl unterschiedlicher Reinigungspositionen (102a, 102b) pro Melkplatz (130a, 130b) auszugeben.

3. Einrichtung zur Reinigung (150) von Melkplätzen (130a, 130b) nach Anspruch 1 oder 2, wobei die mindestens eine Reinigungsposition (102a, 102b) eine Position zur Beaufschlagung von Seitenflächen der Melkplätze (130a, 130b) mit dem Reinigungsfluid durch die Reinigungseinheit (170) umfasst.

4. Einrichtung (150) zur Reinigung von Melkplätzen (130a, 130b) nach einem der vorhergehenden Ansprüche, die mindestens einen Positionsbestimmungssensor (191, 192) zur Bestimmung der mindestens einen Reinigungsposition (102a, 102b) umfasst.

5. Einrichtung (150) zur Reinigung von Melkplätzen (130a, 130b) nach einem der vorhergehenden Ansprüche, die mindestens eine weitere Reinigungseinheit aufweist, wobei die Transporteinheit (180) ausgebildet ist, die Reinigungseinheit (170) und die mindestens eine weitere Reinigungseinheit unabhängig voneinander in eine entsprechende Neutralposition (103a, 103b) und eine Reinigungsposition (102a, 102b) zu bringen.

6. Einrichtung (150) zur Reinigung von Melkplätzen (130a, 130b) nach einem der vorhergehenden Ansprüche, wobei die Transporteinheit (180) ferner ausgebildet ist, die Einrichtung (150) als Ganzes zu verfahren.

7. Einrichtung (150) zur Reinigung von Melkplätzen (130a, 130b) nach Anspruch 6, wobei die Transporteinheit (180) mit einer an einer Decke der Melkplätze (130a, 130b) angeordneten Halterung mechanisch koppelbar ist, um die Einrichtung (150) als Ganzes zu verfahren.

8. Einrichtung (150) zur Reinigung von Melkplätzen (130a, 130b) nach Anspruch 6 oder 7, wobei die Transporteinheit (180) eine bodengestützte Fahreinheit aufweist, um die Einrichtung (150) als Ganzes zu verfahren.

9. Einrichtung (150) zur Reinigung von Melkplätzen (130a, 130b) nach einem der vorhergehenden Ansprüche, die ferner eine Vorrichtung zum automatischen Ansetzen eines Melkgeschirrs aufweist, die mit der Transporteinheit (180) so verbunden ist, dass die Vorrichtung zur Abwicklung eines Melkvorgangs an jeweils den einen oder die mehreren Melkplätze (130a, 130b) heran geführt werden kann.

10. Einrichtung (150) zur Reinigung von Melkplätzen (130a, 130b) nach einem der vorhergehenden Ansprüchen, wobei die Steuereinheit (160) ausgebildet ist, die Reinigungseinheit (170) zur Einnahme der mindestens einen Reinigungsposition (102a, 102b) nur bei Abwesenheit des Bedieners zu veranlassen.

11. Melkstation (100) mit
einem oder mehreren Melkplätzen (130a, 130b), die jeweils ausgestatten sind, ein zu melkendes Tier aufzunehmen und dieses durch ein von einem Bediener oder automatisch anzusetzendes Melkgeschirr zu melken und
einer Einrichtung (150) zur Reinigung von Melkplätzen und ihrer Zugänge nach einem der Ansprüche 1 bis 13.

12. Verfahren zum Betreiben einer Melkstation (100), wobei das Verfahren die Schritte umfasst:
Ausführen eines Melkvorganges in einem oder mehreren Melkplätzen (130a, 130b) unter manuellem oder automatischem Ansetzen eines Melkgeschirrs in dem einen oder mehreren Melkplätzen (130a, 130b),
Anordnen einer Reinigungseinheit (170) einer Reinigungseinrichtung (150) in einer Neutralposition (103a, 103b) während des Ausführens des Melkvorgangs, wobei die Neutralposition (103a, 103b) eine Kontamination der Reinigungseinrichtung (150) durch zu melkende Tiere beim Ausführen des Melkvorgangs ausschließt,
Erzeugen eines Aktivierungssignals nach Beendigung des Melkvorgangs und
Auslösen eines in einer elektronischen Steuerung (160) implementierten Steuerungsablaufs durch das Aktivierungssignal, wobei der Steuerungsablauf eine Transporteinheit (180) der Reinigungseinrichtung (150) veranlasst, die Reinigungseinheit (170) an mindestens einer Reinigungsposition (102a, 102b) zu positionieren und den einen oder die mehreren Melkplätze (130a, 130b) automatisch zu reinigen,
wobei das Ausführen des Melkvorganges ferner ein Positionieren eines Bedieners zum Ansetzen der Melkgeschirre mittels der Transporteinheit (180) der Reinigungseinrichtung (150) umfasst.

13. Verfahren nach Anspruch 12, wobei das Reinigen des einen oder der mehreren Melkplätze (130a, 130b) das Zuführen eines Fluids in lokal selektiver Weise umfasst.

14. Verfahren nach einem der vorhergehenden Verfahrensansprüche, wobei mindestens zwei der Melkplätze (130a, 130b) gleichzeitig gereinigt werden.

15. Verfahren nach einem der vorhergehenden Verfahrensansprüche, das ferner umfasst: Positionieren einer Vorrichtung zum automatischen Ansetzen der Melkgeschirre mittels der Transporteinheit (180) der Reinigungseinrichtung (150).

## Claims

1. An equipment (150) for cleaning milking parlours (130a, 130b) with a cleaning unit (170) configured for controllably dispensing a process fluid,
a transport unit (180) configured for controllably moving the cleaning unit (170) to at least one neutral position (103a, 103b) at which, upon animals being milked in the milking parlours, the cleaning unit (170) cannot be contaminated by the animals, and for controllably moving the cleaning unit (170) to at least one cleaning position (102a, 102b) for cleaning the milking parlours, and
a control unit (160) which is functionally connected to the cleaning unit (170) and the transport unit (180) and which has a control algorithm implemented therein, said control algorithm causing, on the basis of an activation signal, the transport unit (180) to move the cleaning unit (170) to the at least one neutral position (103a, 103b) or to the at least one cleaning position (102a, 102b),
wherein said equipment (15) further comprises an operator accommodation means (151) which is connected to the transport unit (180) such that, for carrying out a milking operation, said operator accommodation means (151) can be conducted to each of said one or more milking parlours (130a, 130b).

2. The equipment (150) for cleaning milking parlours (130a, 130b) according to claim 1, wherein the control algorithm is further configured for causing the cleaning unit (170) to dispense the cleaning fluid at a plurality of different cleaning positions (102a, 102b) per milking parlour (130a, 130b).

3. The equipment (150) for cleaning milking parlours (130a, 130b) according to claim 1 or 2, wherein the at least one cleaning position (102a, 102b) comprises a position for applying, by means of the cleaning unit (170), cleaning fluid to lateral surfaces of the milking parlours (130a, 130b).

4. The equipment (150) for cleaning milking parlours (130a, 130b) according to one of the preceding claims, comprising at least one position sensor (191, 192) for determining the at least one cleaning position (102a, 102b).

5. The equipment (150) for cleaning milking parlours (130a, 130b) according to one of the preceding claims, comprising at least one further cleaning unit, the transport unit (180) being configured for moving the cleaning unit (170) and the at least one further cleaning unit independently of each other to a respective neutral position (103a, 103b) and a cleaning position (102a, 102b).

6. The equipment (150) for cleaning milking parlours (130a, 130b) according to one of the preceding claims, wherein the transport unit (180) is further configured for displacing the entire equipment (150).

7. The equipment (150) for cleaning milking parlours (130a, 130b) according to claim 6, wherein the transport unit (180) may be mechanically coupled to a support arranged on a ceiling of the milking parlours (130a. 130b) so as to displace the entire equipment (150).

8. The equipment (150) for cleaning milking parlours (130a, 130b) according to claim 6 or 7, wherein the transport unit (180) is provided with a floor-supported drive unit so as to displace the entire equipment (150).

9. The equipment (150) for cleaning milking parlours (130a, 130b) according to one of the preceding claims, further comprising a device for automatically attaching a milking cluster, said device being connected to the transport unit (180) such that, for carrying out a milking operation, said device can be conducted to each of said one or more milking parlours (130a, 130b).

10. The equipment (150) for cleaning milking parlours (130a, 130b) according to one of the preceding claims, wherein the control unit (160) is configured for causing the cleaning unit (170) to enter said at least one cleaning position (102a, 102b) only when the operator is not present.

11. A milking station (100) with
one or more milking parlours (130a, 130b), each of which being configured for accommodating an animal to be milked and for milking the latter by a milking cluster to be attached automatically or by an operator, and
an equipment (150) for cleaning milking parlours and their inlets according to one of claims 1 to 13.

12. A method of operating a milking station (100), the method comprising:
performing a milking operation in one or more milking parlours (130a, 130b) and attaching, upon doing so, a milking cluster manually or automatically in said one or more milking parlours (130a, 130b),
arranging a cleaning unit (170) of a cleaning equipment (150) at a neutral position (103a, 103b) when performing said milking operation, said neutral position (103a, 103b) excluding a contamination of the cleaning equipment (150) by animals to be milked when performing said milking operation,
generating an activation signal when the milking operation is completed, and
triggering a control procedure implemented in an electronic control means (160) by said activation signal, said control procedure causing a transport unit (180) of the cleaning equipment (150) to position the cleaning unit (170) at at least one cleaning position (102a, 102b) and to automatically clean said one or more milking parlours (130a, 130b),
wherein performing said milking operation further comprises positioning an operator for attaching the milking clusters by means of the transport unit (180) of the cleaning equipment (150).

13. The method of claim 12, wherein the cleaning of said one or more milking parlours (130a, 130b) comprises supplying a fluid in a locally selective manner.

14. The method of one of the preceding method claims, wherein at least two of said milking parlours (130a, 130b) are cleaned simultaneously.

15. The method of one of the preceding method claims, further comprising: positioning a device for automatically attaching the milking clusters by means of the transport unit (180) of the cleaning equipment (150).

## Revendications

1. Dispositif (150) pour le nettoyage de postes de traite (130a, 130b), comprenant,
une unité de nettoyage (170), qui est conçue pour délivrer, de manière commandée, un fluide de processus, une unité de transport (180), qui est conçue pour amener, de manière commandée, l'unité de nettoyage (170) dans au moins une position neutre (103a, 103b) dans laquelle l'unité de nettoyage (170) ne peut pas être contaminée par les animaux lors de la traite d'animaux dans les postes de traite, et pour amener, de manière commandée, l'unité de nettoyage (170) dans au moins une position de nettoyage (102a, 102b) pour le nettoyage des postes de traite, et
une unité de commande (160) en liaison fonctionnelle avec l'unité de nettoyage (170) et l'unité de transport (180), et comportant un algorithme de commande implémenté, qui, sur la base d'un signal d'activation, fait en sorte que l'unité de transport (180) amène l'unité de nettoyage (170) dans ladite au moins une position neutre (103a, 103b) ou ladite au moins une position de nettoyage (102a, 102b),
le dispositif (150) présentant, par ailleurs, un poste d'accueil d'opérateur (151), qui est relié à l'unité de transport (180) de manière telle, que, pour le déroulement d'une opération de traite, le poste d'accueil d'opérateur (151) puisse être amené respectivement au niveau de chacun desdits un ou plusieurs postes de traite (130a, 130b).

2. Dispositif (150) pour le nettoyage de postes de traite (130a, 130b), selon la revendication 1, dans lequel l'algorithme de commande est par ailleurs conçu pour faire en sorte que l'unité de nettoyage (170) délivre le fluide de nettoyage en une pluralité de positions de nettoyage différentes (102a, 102b) par poste de traite (130a, 130b).

3. Dispositif (150) pour le nettoyage de postes de traite (130a, 130b), selon la revendication 1 ou la revendication 2, dans lequel ladite au moins une position de nettoyage (102a, 102b) comprend une position permettant à l'unité de nettoyage (170) d'alimenter des surfaces latérales des postes de traite (130a, 130b) avec le fluide de nettoyage.

4. Dispositif (150) pour le nettoyage de postes de traite (130a, 130b), selon l'une des revendications précédentes, qui comprend au moins un détecteur de détermination de position (191, 192) pour la détermination de ladite au moins une position de nettoyage (102a, 102b).

5. Dispositif (150) pour le nettoyage de postes de traite (130a, 130b), selon l'une des revendications précédentes, qui comprend au moins une autre unité de nettoyage, l'unité de transport (180) étant conçue pour amener l'unité de nettoyage (170) et ladite au moins une autre unité de nettoyage, indépendamment les unes des autres, dans une position neutre correspondante (103a, 103b) et une position de nettoyage (102a, 102b).

6. Dispositif (150) pour le nettoyage de postes de traite (130a, 130b), selon l'une des revendications précédentes, dans lequel l'unité de transport (180) est par ailleurs conçue pour déplacer le dispositif (150) en tant qu'ensemble.

7. Dispositif (150) pour le nettoyage de postes de traite (130a, 130b), selon la revendication 6, dans lequel l'unité de transport (180) peut être couplée mécaniquement à un support agencé sur un plafond des postes de traite (130a, 130b), pour déplacer le dispositif (150) en tant qu'ensemble.

8. Dispositif (150) pour le nettoyage de postes de traite (130a, 130b), selon la revendication 6 ou la revendication 7, dans lequel l'unité de transport (180) présente une unité de roulement s'appuyant au sol, pour déplacer le dispositif (150) en tant qu'ensemble.

9. Dispositif (150) pour le nettoyage de postes de traite (130a, 130b), selon l'une des revendications précédentes, qui présente, par ailleurs, un équipement pour la mise en place automatique d'un appareillage de traite relié à l'unité de transport (180) de manière à ce que l'équipement puisse, pour le déroulement d'une opération de traite, être amené respectivement au niveau dudit un ou desdits plusieurs postes de traite (130a, 130b).

10. Dispositif (150) pour le nettoyage de postes de traite (130a, 130b), selon l'une des revendications précédentes, dans lequel l'unité de commande (160) est conçue pour faire en sorte que l'unité de nettoyage (170) ne puisse prendre ladite au moins une position de nettoyage (102a, 102b) qu'en l'absence de l'opérateur.

11. Station de traite (100) comprenant un ou plusieurs postes de traite (130a, 130b), qui sont équipés respectivement pour recevoir un animal à traire et assurer sa traite par un appareillage de traite à mettre en place par un opérateur ou de manière automatique, et
un dispositif (150) pour le nettoyage de postes de traite et de leurs accès, selon l'une des revendications 1 à 13.

12. Procédé pour faire fonctionner une station de traite (100), le procédé comprenant les étapes suivantes :
exécution d'une opération de traite dans un ou plusieurs postes de traite (130a, 130b) avec mise en place manuelle ou automatique d'un appareillage de traite dans ledit un ou les plusieurs postes de traite (130a, 130b),
placement d'une unité de nettoyage (170) d'un dispositif de nettoyage (150) dans une position neutre (103a, 103b) pendant l'exécution de l'opération de traite, la position neutre (103a, 103b) excluant une contamination du dispositif de nettoyage (150) par les animaux à traire lors de l'exécution de l'opération de traite,
production d'un signal d'activation après achèvement de l'opération de traite, et
déclenchement, par le signal d'activation, d'une séquence de commande implémentée dans une commande électronique (160), la séquence de commande faisant en sorte qu'une unité de transport (180) du dispositif de nettoyage (150), positionne l'unité de nettoyage (170) dans au moins une position de nettoyage (102a, 102b) et assure le nettoyage automatique dudit un ou des plusieurs postes de traite (130a, 130b),
l'exécution de l'opération de traite comprenant, par ailleurs, le positionnement, au moyen de l'unité de transport (180) du dispositif de nettoyage (150), d'un opérateur pour la mise en place des appareillages de traite.

13. Procédé selon la revendication 12, selon lequel le nettoyage dudit un ou des plusieurs postes de traite (130a, 130b), comprend l'amenée d'un fluide d'une manière localement sélective.

14. Procédé selon l'une des revendications de procédé précédentes, selon lequel au moins deux des postes de traite (130a, 130b) sont nettoyés simultanément.

15. Procédé selon l'une des revendications de procédé précédentes, comprenant, par ailleurs : le positionnement, au moyen de l'unité de transport (180) du dispositif de nettoyage (150), d'un système destiné à la mise en place automatique des appareillages de traite.
